(19) **Europäisches Patentamt / European Patent Office / Office européen des brevets**

(11) **EP 4 712 631 A1**

(12) **EUROPEAN PATENT APPLICATION**
published in accordance with Art. 153(4) EPC

(43) Date of publication:
**18.03.2026 Bulletin 2026/12**

(21) Application number: **24807460.1**

(22) Date of filing: **10.05.2024**

(51) International Patent Classification (IPC):
**H04W 72/0453** (2023.01)   **H04W 72/0457** (2023.01)
**H04W 72/0446** (2023.01)   **H04W 72/231** (2023.01)
**H04L 5/00** (2006.01)

(52) Cooperative Patent Classification (CPC):
**H04L 5/00; H04W 72/0446; H04W 72/0453;
H04W 72/0457; H04W 72/231**

(86) International application number:
**PCT/KR2024/006349**

(87) International publication number:
**WO 2024/237585 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.05.2023 KR 20230061971**

(71) Applicant: **LG Electronics Inc.**
**Yeongdeungpo-gu
Seoul 07336 (KR)**

(72) Inventors:
• **YOU, Hyangsun**
  **Seoul 06772 (KR)**
• **KO, Hyunsoo**
  **Seoul 06772 (KR)**
• **KIM, Seonwook**
  **Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **OPERATION METHOD OF DEVICE IN WIRELESS COMMUNICATION SYSTEM, AND DEVICE USING METHOD**

(57)   An operation method of a device in a wireless communication system, and the device are provided. The device monitors PDCCH candidates in a CORESET according to a search space, and receives downlink control information through the monitoring. The CORESET is determined as a first CORESET or a second CORESET according to whether a time resource constituting the search space is an HD symbol or an FD Symbol, and the first CORESET and the second CORESET are different CORESETs.

FIG. 17

Monitoring PDCCH candidates in a CORESET determined according to a search space, wherein the CORESET is determined as either a first CORESET or a second CORESET depending on whether a time resource constituting the search space is a half duplex (HD) symbol or a full duplex (FD) symbol — S171

Receiving downlink control information (DCI) through the monitoring — S172

EP 4 712 631 A1

## Description

TECHNICAL FIELD

This disclosure relates to a method of operating a device in a wireless communication system and a device using the method.

BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR, full duplex (FD) operation can be performed. When performing FD operation, downlink reception and uplink transmission can occur simultaneously in a given time resource, which is different from half duplex (HD) operation in which only either downlink reception or uplink transmission can be performed in a specific time resource. For FD operation, i) in the same time resource, some frequency resources may be allocated to downlink subbands and other frequency resources to uplink subbands, or ii) frequency resources may be allocated that can be used for both downlink reception and uplink transmission in the same time resource.

The former may be called subband-wise full duplex (hereinafter referred to as subband full duplex or SBFD), and the latter may be called spectrum-sharing full duplex (hereinafter referred to as SSFD).

Meanwhile, the UE monitors downlink control information (DCI) in the physical downlink control channel (PDCCH) search space. The PDCCH search space (hereinafter, abbreviated as 'search space" for convenience) may refer to an area in the downlink resource grid where PDCCHs can be transmitted.

The UE performs blind decoding across this search space to find PDCCH data (i.e., DCI).

For a UE to decode a PDCCH (DCI), it should accurately determine the values of various parameters, such as the PDCCH's location, structure (aggregation level, interleaving, etc.), and scrambling code. However, this information is not known to the UE in advance, and in most cases, these values change dynamically. The UE is aware of the specific range within which the network is likely to transmit the PDCCH (DCI), and this information can be obtained through predefined rules or signaling messages.

Within this specific range, the UE should attempt PDCCH/DCI decoding through trial and error using numerous different types of parameters. This decoding method is called blind decoding. The area where the UE performs blind decoding is called a search space.

However, among the resources that constitute the search space, if the time domain includes SBFD resources or non-SBFD resources, the frequency resources that constitute the search space may be different in the SBFD resources and non-SBFD resources.

For example, a specific frequency resource used to construct a search space in a non-SBFD resource may not be used to construct a search space in an SBFD resource.

In the prior art, UE operation in the search space is specified without considering such aspects. Accordingly, applying the prior art as is to a wireless communication system in which full duplex (e.g., SBFD) is introduced may cause problems in resource efficiency and securing communication reliability.

## DISCLOSURE

### TECHNICAL PROBLEM

The technical problem that the present disclosure aims to solve is to provide a method of operating a device in a wireless communication system and a device that uses the method.

### TECHNICAL SOLUTION

In one aspect, provided is a method of operating a user equipment (UE) in a wireless communication system. The method includes monitoring PDCCH candidates in a control resource set (CORESET) according to a search space and receiving downlink control information (DCI) through the monitoring. At this time, the CORESET is determined as a first CORESET or a second CORESET depending on whether the time resource constituting the search space is a half duplex (HD) symbol or a full duplex (FD) symbol.

In another aspect, provided are a UE, an apparatus and computer readable medium (CRM) performing the method.

In still another aspect, provided are a method of operating a base station in a wireless communication system, and a base station using the operating method.

The base station generates downlink control information (DCI) and transmits the DCI to the UE via a PDCCH in a search space within a CORESET. At this time, the CORESET is determined as a first CORESET or a second CORESET depending on whether a time resource constituting the search space is a HD symbol or a FD symbol.

ADVANTAGEOUS EFFECTS

According to the method of the present disclosure, even if the time resources constituting the search space are mixed with SBFD resources and non-SBFD resources, PDCCH monitoring can be performed by determining appropriate frequency resources from the SBFD and non-SBFD resources. Therefore, efficient use of wireless resources and increased communication reliability can be achieved.

In addition, PDCCH monitoring is performed by determining appropriate frequency resources from SBFD resources and non-SBFD resources, thereby preventing unnecessary power consumption of the UE.

**BRIEF DESCRIPTION OF THE DRAWINGS**

FIG. 1 illustrates a wireless communication system to which the present disclosure can be applied.

FIG. 2 is a block diagram showing the radio protocol architecture for the user plane.

FIG. 3 is a block diagram showing the radio protocol structure for the control plane.

FIG. 4 illustrates the system structure of a next-generation radio access network (NG-RAN) to which NR is applied.

FIG. 5 illustrates the functional division between NG-RAN and 5GC.

FIG. 6 illustrates a frame structure that can be applied in NR.

FIG. 7 illustrates the slot structure of an NR frame.

FIG. 8 illustrates the CORESET.

FIG. 9 shows an example of a frame structure for a new wireless access technology.

FIG. 10 illustrates the structure of a self-contained slot.

FIG. 11 illustrates physical channels and typical signal transmission.

FIG. 12 shows examples of how to apply full duplex within an intra-carrier.

FIG. 13 shows an example in which a time resource operating in half duplex (HD) and a time resource operating in full duplex (FD) such as SBFD or SSFD exist together.

FIG. 14 shows examples of first time resource, second time resource, first frequency resource and second frequency resource.

FIG. 15 shows another example of a first time resource, a second time resource, a first frequency resource, and a second frequency resource.

FIG. 16 shows an example of setting frequency resources that constitute a CORESET.

FIG. 17 illustrates a method of operating a UE in a wireless communication system.

FIG. 18 illustrates signaling and operation between a base station and a UE when applying the method of FIG. 17.

FIG. 19 shows an example of determining the frequency resources that constitute a CORESET.

FIG. 20 illustrates frequency resources that constitute a CORESET.

FIG. 21 illustrates a case where the 'frequency domain resources_sbfd' information is extended and applied to both subbands.

FIG. 22 illustrates the REG indexing method.

FIG. 23 illustrates a wireless device that can be applied the present specification.

FIG. 24 shows an example of a signal processing module structure.

FIG. 25 shows another example of the structure of a signal processing module in a transmission device.

FIG. 26 shows an example of a wireless communication device according to an implementation example of the present disclosure.

FIG. 27 shows an example of the processor 2000.

FIG. 28 shows an example of the processor 3000.

FIG. 29 shows another example of a wireless device.

FIG. 30 shows another example of a wireless device applied to the present specification.

FIG. 31 illustrates the communication system 1 applied to this specification.

**MODE FOR INVENTION**

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".
A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".
In the present specification, "at least one of A and B" may mean "only A", "only B", or "both A and B". In addition, in the present specification, the expression "at least one of A or B" or "at least one of A and/or B" may be interpreted as "at least one of A and B".
In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".
In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".
Technical features described individually in one figure in the present specification may be individually implemented, or may be simultaneously implemented.

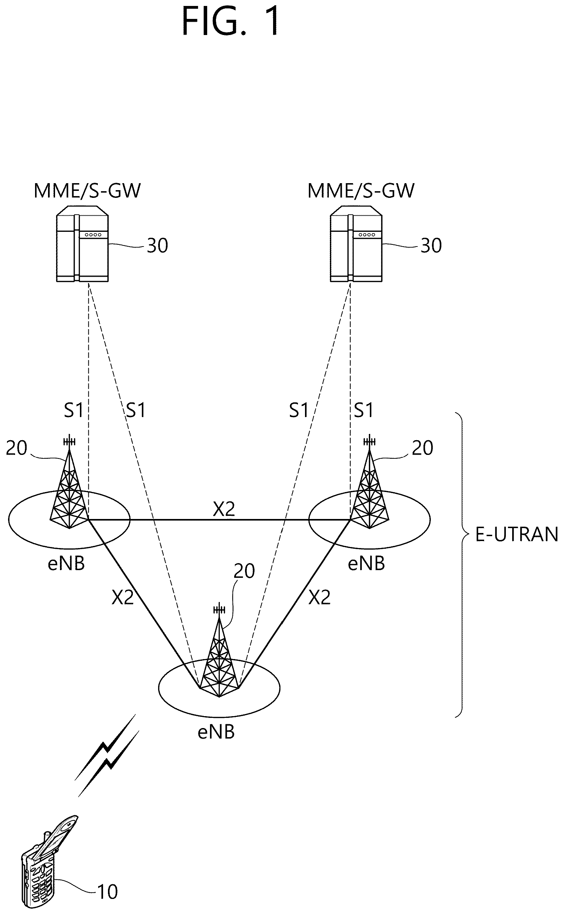

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.
The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

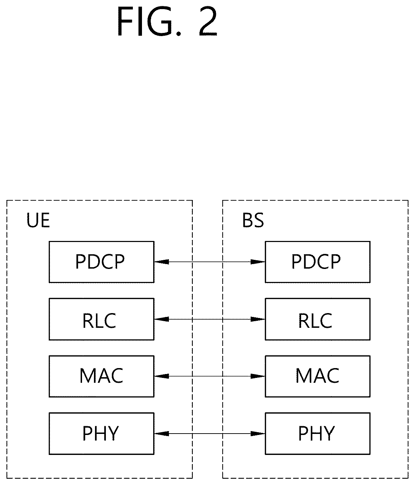

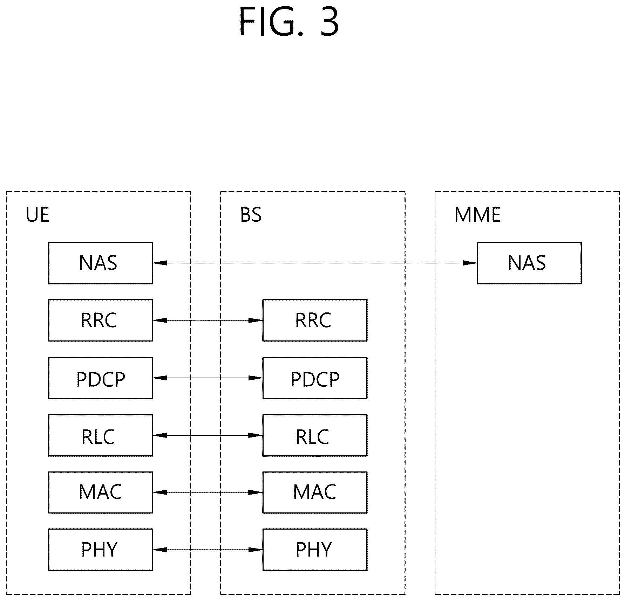

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

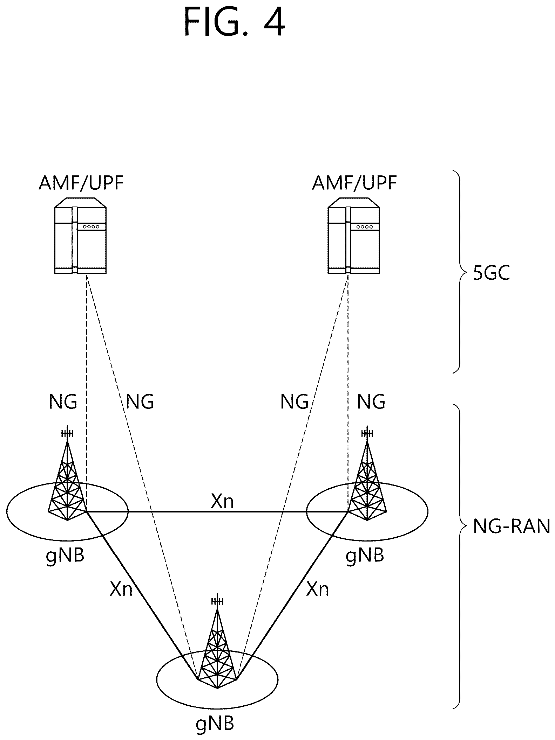

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

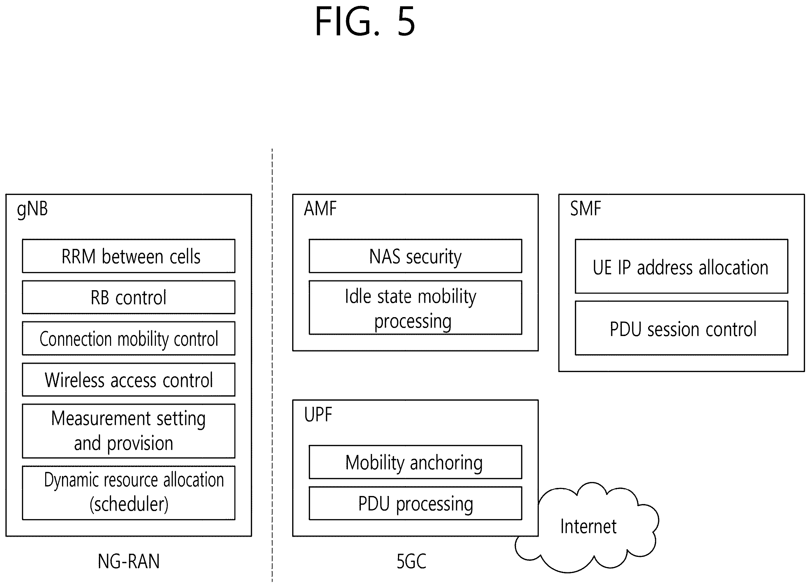

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

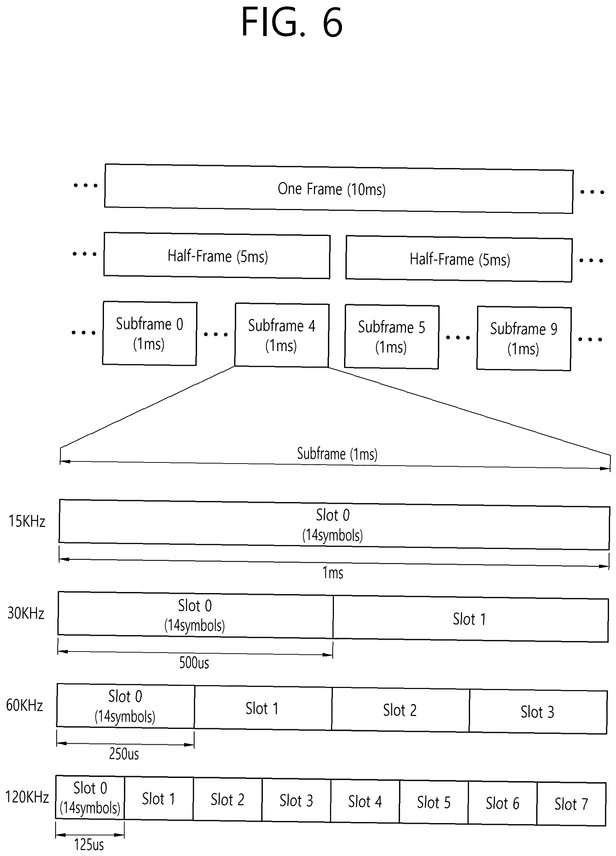

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration $\mu$.

[Table 1]

| $\mu$ | $\Delta f = 2^{\mu} \cdot 15$[kHz] | Cyclic prefix (CP) |
|---|---|---|
| 0 | 15 | Normal |
| 1 | 30 | Normal |
| 2 | 60 | Normal / Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |

(continued)

| $\mu$ | $N^{slot}_{symb}$ | $N^{frame,\mu}_{slot}$ | $N^{subframe,\mu}_{slot}$ |
|---|---|---|---|
| 2 | 14 | 40 | 4 |
| 3 | 14 | 80 | 8 |
| 4 | 14 | 160 | 16 |

FIG. 6 illustrates a case of $\mu$=0, 1, 2, 3.

Table 2-1 below illustrates that the number of symbols per slot, the number of slots per frame, and the number of slots per subframe vary depending on the SCS, in case of using an extended CP.

[Table 2-1]

| SCS($15*2^{\mu}$) | $N^{slot}_{symb}$ | $N^{frame,\mu}_{slot}$ | $N^{subframe,\mu}_{slot}$ |
|---|---|---|---|
| 60KHz ($\mu$=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

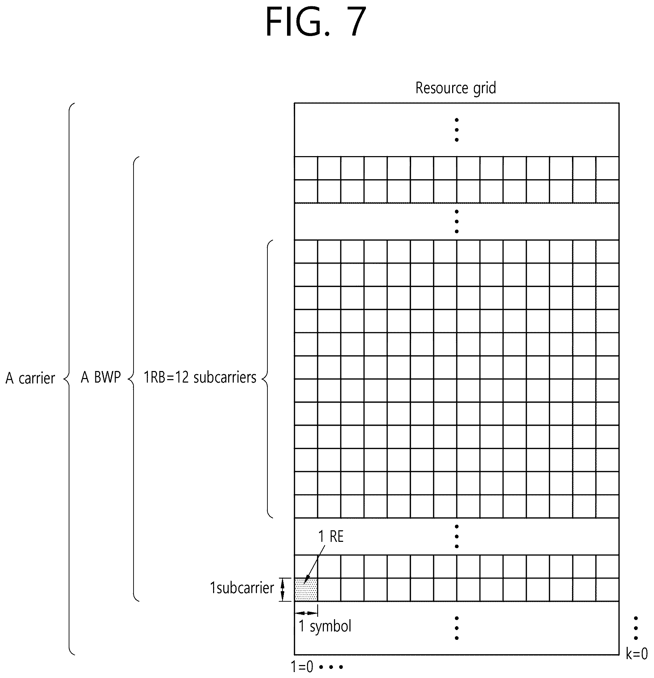

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

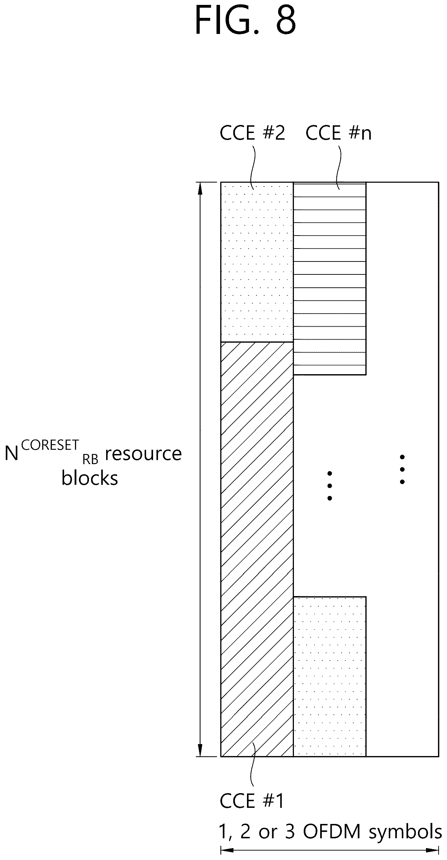

FIG. 8 illustrates CORESET.

Referring to FIG. 8, the CORESET includes $N^{CORESET}_{RB}$ number of resource blocks in the frequency domain, and $N^{CORESET}_{symb} \in \{1, 2, 3\}$ number of symbols in the time domain. $N^{CORESET}_{RB}$ and $N^{CORESET}_{symb}$ may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system band used by a base station (BS). All the UEs, excluding some (e.g., eMTC/NB-IoT UE) supporting only a narrow band, shall be able to receive wireless signals of the entire system band of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system band.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

<Self-contained subframe structure>

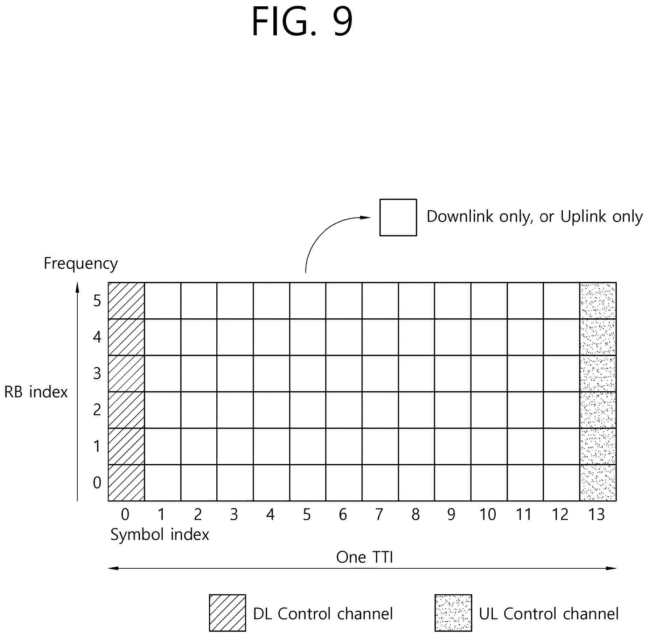

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

In FIG. 9, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

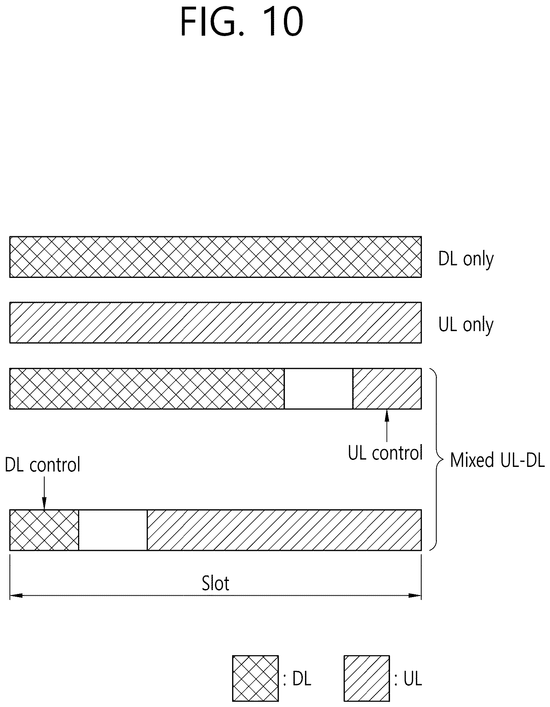

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.

1. DL only configuration,
2. UL only configuration,
3. Mixed UL-DL configuration:

   DL region + Guard period (GP) + UL control region,
   DL control region + GP + UL region.
   DL region: (i) DL data region, (ii) DL control region + DL data region.
   UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

<Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of $5\times5$ cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

<Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH associated with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks (SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.

1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

[Table 4]

| QCL Type | Description |
| --- | --- |
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s ($0 \leq s < 40$), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

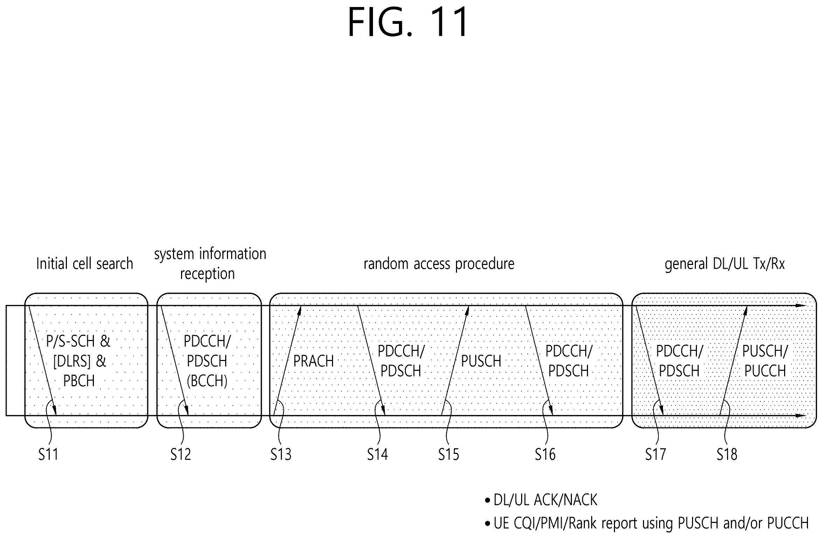

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/indication of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.

- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

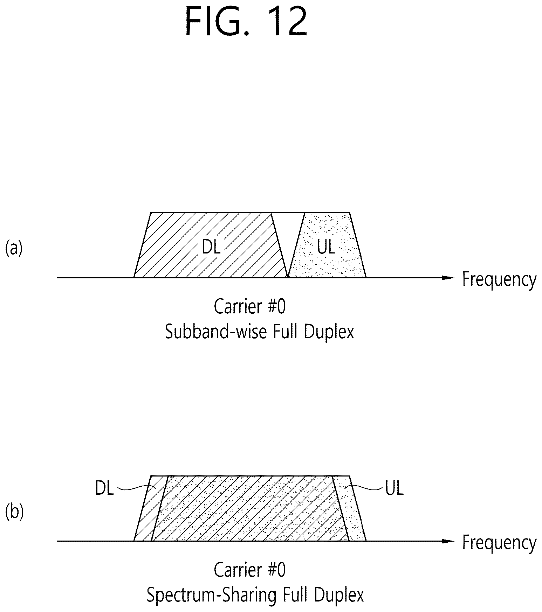

FIG. 12 shows examples of how to apply full duplex within an intra-carrier.

Referring to FIG. 12, the full duplex method includes subband-wise full duplex (hereinafter referred to as subband full duplex or SBFD) as shown in (a) of FIG. 12 and spectrum sharing full duplex (hereinafter referred to as SSFD as shown in (b) of FIG. 12 may be considered.

In the case of SBFD, DL and UL are transmitted and received through different frequency resources within the same carrier (e.g., carrier #0). That is, different frequency resources are used in DL and UL for the same time resource.

In the case of SSFD, DL and UL are transmitted and received through the same or overlapped frequency resources within the same carrier (e.g., carrier #0). That is, the same or overlapping frequency resources can be used in DL and UL for the same time resource.

This full-duplex (FD) operation can also be used in combination with the existing half-duplex (HD) operation. For example, among time resources used for existing half-duplex-based TDD operation, some time resources may be used for full duplex operation. SBFD or SSFD operations can be performed on time resources that perform full duplex operations.

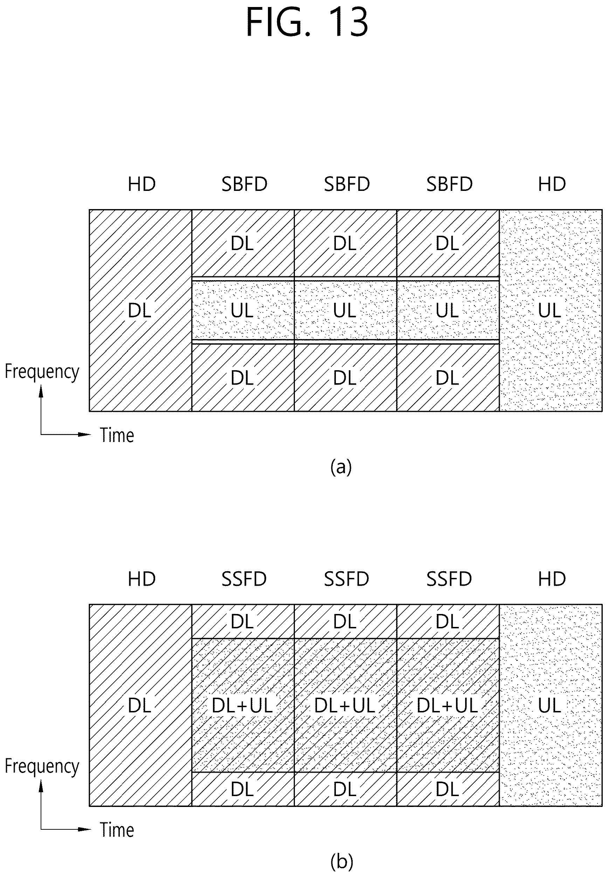

FIG. 13 shows an example in which a time resource operating in half duplex (HD) and a time resource operating in full duplex (FD) such as SBFD or SSFD exist together.

In (a) of FIG. 13, some time resources operating as SBFD are indicated as SBFD, and time resources operating as HD are indicated as HD. In (b) of FIG. 13, some time resources operating as SSFD are indicated as SSFD, and time resources operating as HD are indicated as HD. The unit of time resource may be, for example, a slot or symbol.

In time resources operating as SBFD, some frequency resources are used as DL resources, and other frequency resources are used as UL resources. Between the DL frequency resource and the UL frequency resource, there may be a guard subband that is unused and empty for both DL and UL. Guard subbands may also be referred to by other terms, such as guard frequency resources or guard subcarrier(s).

In time resources operating with SSFD, the entire frequency resource can be used for both DL and UL. Or, to reduce the impact of interference from other adjacent carriers (this may be referred to as ACI (adjacent carrier interference)), Some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource that operate as HD is referred to as a HD slot, and a slot resource that operate as SBFD and a slot resource that operate as SSFD are referred to as a SBFD slot and a SSFD slot, respectively. Additionally, the SBFD slot and the SSFD slot can be collectively referred to as FD slots.

In the present disclosure, in time resources operating in FD, among all frequency resources, frequency resources operating in DL are referred to as a DL subband, and frequency resources operating in UL are also referred to as an UL subband, for convenience.

In the case of full duplex operation, both the base station and the UE may perform full duplex operation. That is, both the base station and the UE may simultaneously perform DL and UL transmission and reception using the same or different frequency resources in the same time resource.

Alternatively, only the base station can perform full duplex operation and the UE may perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

Based on the above discussion, this disclosure proposes a method for a UE to be configured and determine the time resource in which the SBFD symbol is located in intra-carrier full duplex operation.

In the following, the term network may be interpreted as gNB or CU/DU. The term UE(terminal) may also be interpreted as a mobile terminal (MT) of an IAB node or a MT of a network-controlled repeater (NCR-MT).

A. Characteristics of DL/UL time/frequency resources for SBFD and SSFD operation

A cell (base station) can perform both DL transmission and UL reception in the same time resource in an FD scheme such as SBFD or SSFD. For example, the base station may perform HD operation in a first time resource and FD operation in a second time resource (which may be a time resource other than the first time resource).

The first time resource performing HD operation performs DL operation or UL operation across the frequency resources that comprise the entire system bandwidth. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the network performs DL operations through all or part of the frequency resources (first frequency resources) among the frequency resources that constitute the system band of the cell, and performs UL operations through all or part of the frequency resources (second frequency resources).

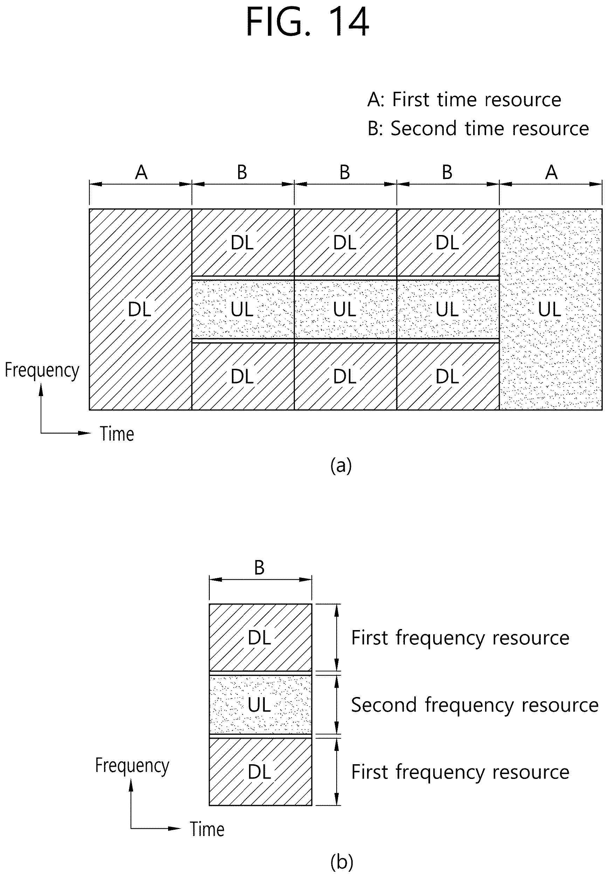

FIG. 14 shows examples of a first time resource, a second time resource, a first frequency resource, and a second frequency resource.

Referring to (a) of FIG. 14, in the first time resource (represented by A), the device operates in HD. In the second time resource (represented by B), for example, the device can operate as SBFD. In the first time resource, the resource indicated by DL corresponds to the above-described 1-1 time resource, and the resource indicated by UL corresponds to the above-described 1-2 time resource.

Referring to (b) of FIG. 14, in the second time resource, the frequency resource operating as DL corresponds to the above-described first frequency resource, and the frequency resource operating as UL corresponds to the above-described second frequency resource.

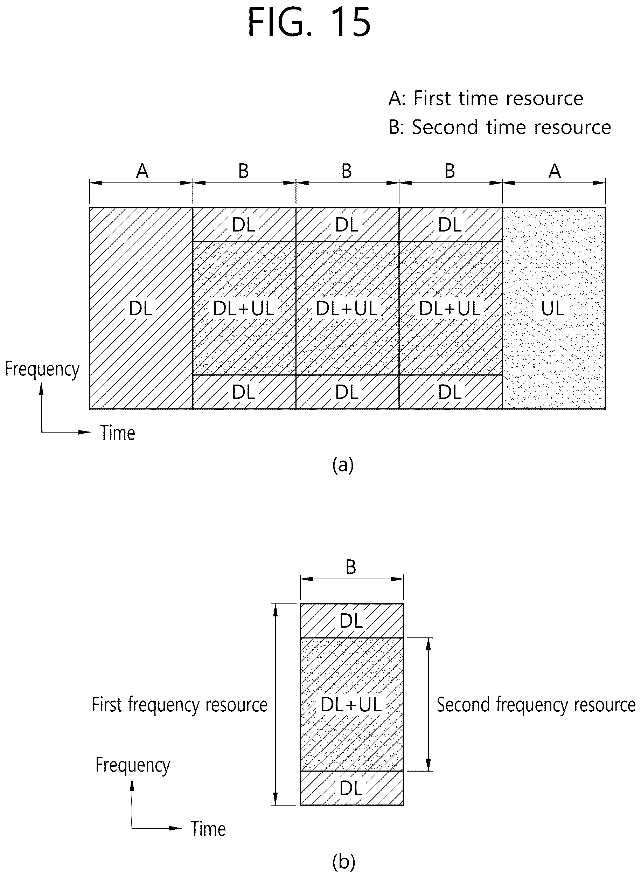

FIG. 15 shows another example of a first time resource, a second time resource, a first frequency resource, and a second frequency resource.

Referring to (a) of FIG. 15, in the first time resource (denoted by A), the device operates as a half-duplex. In the second time resource (labelled B), the device may operate, for example, as an SSFD. In the first time resource, the resource denoted DL corresponds to the first time resource described above, and the resource denoted UL corresponds to the second time resource described above.

Referring to (b) of FIG. 15, in the second time resource, the frequency resources operating as DL and DL+UL correspond to the first frequency resource described above, and the frequency resources operating as DL+UL correspond to the second frequency resource described above.

The first frequency resource and/or the second frequency resource may have all or some of the following characteristics.

1) When performing SBFD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.

2) When performing SSFD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.

3) When performing an SBFD operation, the second frequency resource may be composed of contiguous frequency resources, and the first frequency resource may be composed of non-contiguous frequency resources. In this case, the first frequency resource may comprise a plurality of discontiguous sets (e.g., two), each of which may comprise a contiguous frequency resource. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. In this case, the second frequency resource may comprise a plurality of discontiguous sets (e.g., two), each of which may comprise a contiguous frequency resource. This is to reduce interference from DL transmission on UL resources in adjacent carriers by placing the second frequency resource used for DL at the center of the frequency resources constituting the cell.

4) When performing SSFD operation, the second frequency resource may be composed of some frequency resources of the first frequency resource. At this time, the second frequency resource may be configured to have fewer X physical resource blocks (PRBs) on one or both edges of the carrier than the first frequency resource. This is to reduce interference from DL transmission on adjacent carriers to UL reception.

The network determines the 'first time resource' and 'second time resource', and the 'first frequency resource' and 'second frequency resource' as described above, and provides all or part of the corresponding information to the UE.

For the FD (SBFD and/or SSFD) operation of the cell, the UE may determine information about the time resources (hereinafter referred to as SBFD symbols) that operate as SBFD (and/or SSFD). For this purpose, information about the SBFD symbol may be set to the UE from the network.

When a specific time resource is set as a time resource operating in SBFD (SBFD symbol), both DL and UL resources may exist in that time resource. In this case, if there is no UL signal for the base station to receive in that time resource, the base station can only perform DL transmissions. In SBFD resources, DL transmission is only within the DL subband. Therefore, even if there is no UL signal transmitted in the UL subband, DL transmission can only be performed within the DL subband.

In this case, if the base station has no UL transmissions to receive, even if the specific time resource is a resource determined to be SBFD symbol, it may consider performing DL transmissions outside the DL subband as well as in the DL subband to improve DL throughput. That is, it may consider performing DL transmissions in the full band.

That is, in resources determined to be SBFD symbols, it can consider a fallback to TDD operation where DL or UL operation is performed over the full band, rather than SBFD operation over DL/UL subbands.

The UE may perform the same TDD operation (half duplex operation) as an existing UE in resources that are not determined to be SBFD symbols. That is, only DL or UL operations can be performed using all frequency resources of the cell.

In the present disclosure, a time resource operating as SBFD or an SBFD symbol may mean a 'second time resource'. Additionally, in this disclosure, a time resource operating in TDD, a time resource operating in **HD,** a TDD symbol, or an HD symbol may mean a 'first time resource'.

The DL subband referred to in this disclosure may mean the 'first frequency resource'. Additionally, the UL subband mentioned in this disclosure may mean the 'second frequency resource'.

This disclosure assumes SBFD operation where a cell performs DL and UL simultaneously using different frequency resources (e.g., subbands) in the same time resource. However, the content of this disclosure may also be applicable when the cell performs SSFD operation.

This disclosure may include the following UE operations.

When the UE performs DL reception in an SBFD symbol, i) the UE may perform DL reception using frequency resources within the DL subband. The UE may perform DL reception using frequency resources within the DL subband within the DL BWP. ii) The UE does not perform DL reception on frequency resources outside the DL subband. The UE does not perform DL reception using frequency resources outside the DL subband within the DL BWP.

If the UE performs UL transmission on SBFD symbols, i) the UE may use frequency resources within the UL subband to perform UL transmission. The UE may use frequency resources within the UL subband to perform UL transmission within the UL BWP. ii) The UE does not perform UL transmission on frequency resources other than the UL subband. The UE does not perform UL transmission using frequency resources other than the UL subband within the UL BWP.

In general, the UE may perform DL reception within the DL subband and UL transmission within the UL subband in time resources for which the cell is determined to operate in SBFD. However, in the case where the gNB (base station) only performs DL transmission or UL reception in the time resources for which the cell is determined to operate as SBFD, or, if necessary, performs DL transmission or UL reception through the entire band (can receive DL or UL scheduling) can be considered.

Below, the transmission and reception resources of the PDCCH in the time resources where the SBFD symbol is located during intra-carrier full duplex operation are described.

In existing NR, a CORESET and a search space are configured for PDCCH transmission.

The frequency resources constituting the CORESET may be configured through specific parameters (e.g., frequencyDomainResources) within an information element (e.g., ControlResourceSet IE) of a higher layer (e.g., RRC). Table 5 shows an example of a ControlResourceSet IE.

[Table 5]

```
ControlResourceSet information element

-- ASN1START

-- TAG-CONTROLRESOURCESET-START


ControlResourceSet ::=          SEQUENCE {
  controlResourceSetId          ControlResourceSetId,
  frequencyDomainResources      BIT STRING (SIZE (45)),
  duration                      INTEGER (1..maxCoReSetDuration),
  cce-REG-MappingType           CHOICE {
    interleaved                 SEQUENCE {
      reg-BundleSize            ENUMERATED {n2, n3, n6},
      interleaverSize           ENUMERATED {n2, n3, n6},
      shiftIndex                INTEGER(0..maxNrofPhysicalResourceBlocks-1)     OPTIONAL -- Need S
    },
    nonInterleaved              NULL
  },
  precoderGranularity           ENUMERATED {sameAsREG-bundle, allContiguousRBs},
  tci-StatesPDCCH-ToAddList      SEQUENCE(SIZE (1..maxNrofTCI-StatesPDCCH)) OF TCI-StateId OPTIONAL, --
Cond NotSIB-initialBWP
  tci-StatesPDCCH-ToReleaseList    SEQUENCE(SIZE (1..maxNrofTCI-StatesPDCCH)) OF TCI-StateId OPTIONAL, --
Cond NotSIB-initialBWP
  tci-PresentInDCI              ENUMERATED {enabled}              OPTIONAL, -- Need S
  pdcch-DMRS-ScramblingID       INTEGER (0..65535)                OPTIONAL, -- Need S
  ...,
  [[
  rb-Offset-r16                 INTEGER (0..5)          OPTIONAL, -- Need S
  tci-PresentDCI-1-2-r16        INTEGER (1..3)              OPTIONAL, -- Need S
  coresetPoolIndex-r16          INTEGER (0..1)              OPTIONAL, -- Need S
  controlResourceSetId-v1610    ControlResourceSetId-v1610              OPTIONAL  -- Need S
  ]],
  [[
```

```
  followUnifiedTCIstate-r17     ENUMERATED {enabled}              OPTIONAL  -- Need R
  ]]
}

-- TAG-CONTROLRESOURCESET-STOP

-- ASN1STOP
```

In Table 5, frequencyDomainResources and rb-Offset are specifically as follows:

frequencyDomainResources: This parameter may be configured as a bit string and indicates the frequency-domain resources of the CORESET. Each bit corresponds to a group (RBG) of six resource blocks (RBs), starting from the first RB group of the BWP or MBS (multicast and broadcast service) common frequency resource (CFR) for which the CORESET is configured. If more than one search space is configured by freqMonitorLocation-r16, only the first $N_{RBG,set0}^{size}$ bits are valid. The first (i.e., leftmost/most significant) bit corresponds to the first RB group of the BWP or MBS CFR for which the CORESET is configured. A bit set to 1 indicates that the corresponding RB group belongs to the frequency-domain resources of this CORESET. Bits corresponding to RB groups that are not fully contained within the bandwidth part of the CORESET are set to 0.

rb-Offset: Indicates the RB level offset, in RB units, from the first RB of the first 6-RB group to the first RB of the BWP.

The first common RB of the first group consisting of 6 RBs (e.g., PRBs) has a common RB index $6 \cdot \left\lceil N_{BWP}^{start}/6 \right\rceil$ if rb-Offset is not provided, or has a common RB index $N_{BWP}^{start}+N_{RB}^{offset}$ if $N_{RB}^{offset}$ is provided by rb-Offset.

Here, $N_{BWP}^{start}$ denotes the starting common RB position of the DL BWP.

For convenience of explanation, the following designations are used in this disclosure:

$N_{BWP}^{start}$: Denotes the starting common RB (CRB) index of the DL BWP.

$RB_{RB group}^{start}$: Denotes the first RB of the first 6 RB group, to represent the frequency resources constituting the CORESET.

In existing NR, RB resources within a DL BWP are grouped into groups of six contiguous RBs starting from $RB_{RB group}^{start}$, defining multiple RB groups. Among these, the RB group positions included in the CORESET are set in a bitmap format using frequencyDomainResources.

However, in existing TDD environments, all frequency resources within a DL symbol can be used for DL reception. However, in SBFD symbols, a UE may only receive DL signals/channels within frequency resources identified as DL subbands.

When a UE receives a PDCCH in a non-SBFD symbol and an SBFD symbol using the same CORESET, the resource blocks (RBs)/resource elements (REs) configured as frequency resources constituting the CORESET may overlap with resources other than the DL subband (i.e., the UL subband and/or the guard subband). In this case, a problem may occur in which the UE cannot perform DL reception on the overlapped RB/RE resources.

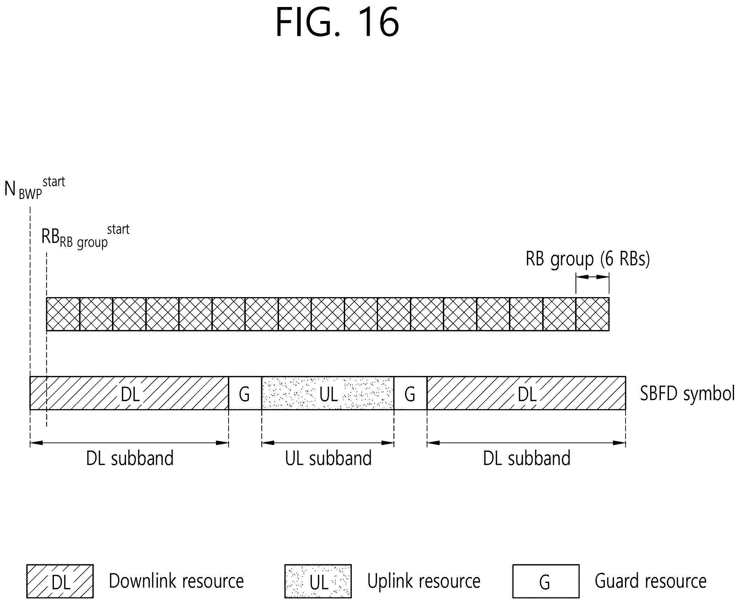

FIG. 16 illustrates an example of configuring frequency resources constituting a CORESET.

Referring to FIG. 16, within a DL BWP, 6 contiguous RBs are grouped starting with $RB_{RB group}^{start}$ forming multiple RB groups. Some of these RB groups may be configured as a CORESET. In this case, for a specific time resource (e.g., an SBFD symbol), some of the RB groups constituting the CORESET may overlap with resources other than a DL subband (e.g., an UL subband and/or a guard subband). In such cases, if the configured resources are to be used as is, the UE may have to perform PDCCH monitoring, including frequency resources where downlink signals cannot be received.

This disclosure considers these issues and describes a method for transmitting and receiving PDCCHs in SBFD symbols.

Approach 1. Prevent CORESETs that overlap with non-DL subband resources in SBFD symbols.

In SBFD symbols, the search space and CORESET can be configured so that the frequency resources where the UE receives the PDCCH do not overlap with 'non-DL subband resources' (i.e., UL subbands and/or guard subbands).

More specifically, the following methods can be applied.

Method 1. This method uses different search spaces for SBFD and non-SBFD symbols.

The search space can be configured so that SBFD and non-SBFD symbols have different search spaces. In this case, a CORESET that does not overlap with 'non-DL subband resources' can be applied to the search space used for SBFD symbols.

At this time, a CORESET that does not overlap with 'non-DL subband resources' (i.e., UL subbands and/or guard subbands) may also be applied to the search space that includes non-SBFD symbols.

Method 2. This method applies different CORESETs to SBFD and non-SBFD symbols within the same search space.

To address the issue of frequency resources constituting a CORESET in an SBFD symbol overlapping with non-DL subband resources for a specific search space, the UE may apply different CORESETs to SBFD and non-SBFD symbols.

For example, the UE may apply CORESET 1 to non-SBFD symbols and CORESET 2 to SBFD symbols for a specific search space. Specifically, for search spaces with the same search space ID, CORESET 1 with CORESET ID #1 can be applied to non-SBFD symbols, and CORESET 2 with CORESET ID #2 can be applied to SBFD symbols.

In some embodiments, if all symbol resources constituting a search space in a specific slot are non-SBFD symbols, the UE applies CORESET 1 to that search space in that slot. Conversely, if the symbol resources constituting the search space in a specific slot include at least one SBFD symbol, the UE applies CORESET 2 to the search space in that slot.

In this case, CORESET 1 may refer to the CORESET applied to the search space configured via the existing SearchSpace IE. That is, it can refer to a CORESET applied to the search space in a prior art that does not consider SBFD resources.

CORESET 2 refers to a CORESET applied to the SBFD symbol, and the UE may be configured with the CORESET ID value for CORESET 2 from the network via signaling such as RRC. For example, in addition to the controlResourceSetId previously set via the SearchSpace IE, an additional CORESET ID (let's call this 'controlResourceSetId _sbfd') can be set. This controlResourceSetId sbfd can refer to the CORESET ID of CORESET 2.

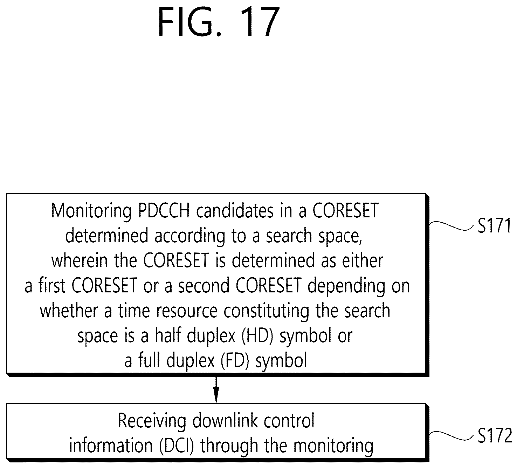

FIG. 17 illustrates a method of operating a UE in a wireless communication system.

Referring to FIG. 17, the UE monitors PDCCH (physical downlink control channel) candidates in a control resource set (CORESET) determined according to a search space. Depending on whether a time resource constituting the search space is a half duplex (HD) symbol or a full duplex (FD) symbol, the CORESET is determined as either a first CORESET or a second CORESET (S171). The first CORESET and the second CORESET are different CORESETs.

The UE receives downlink control information (DCI) through the monitoring (S172).

Each step of FIG. 17 will be described in more detail.

If the time resource constituting the search space is a HD symbol, the UE monitors PDCCH candidates in a first CORESET. If the time resource constituting the search space is a FD symbol, the UE monitors PDCCH candidates in a second CORESET.

If the UE supports FD operation, a second CORESET, different from the first CORESET, may be configured.

For example, the first CORESET and the second CORESET may be configured using the SearchSpace, a higher layer (RRC) information element, as shown in the following table.

[Table 6]

[258]

```
-- ASN1START
-- TAG-SEARCHSPACE-START


SearchSpace ::=              SEQUENCE {
  searchSpaceId              SearchSpaceId,
  controlResourceSetId     ControlResourceSetId      OPTIONAL,   -- Cond SetupOnly
    controlResourceSetId_sbfd  ControlResourceSetId for sbfd   OPTIONAL,   -- Cond SetupOnly
  monitoringSlotPeriodicityAndOffset     CHOICE {
    sl1                    NULL,
    sl2                    INTEGER (0..1),
    sl4                    INTEGER (0..3),
```

...

```
    sl5                         INTEGER (0..4),
    sl8                         INTEGER (0..7),
    sl10                        INTEGER (0..9),
    sl16                        INTEGER (0..15),
    sl20                        INTEGER (0..19),
    sl40                        INTEGER (0..39),
    sl80                        INTEGER (0..79),
    sl160                       INTEGER (0..159),
    sl320                       INTEGER (0..319),
    sl640                       INTEGER (0..639),
    sl1280                      INTEGER (0..1279),
    sl2560                      INTEGER (0..2559)
    }                           OPTIONAL,   -- Cond Setup4
    duration        INTEGER (2..2559)       OPTIONAL,   -- Need S
    monitoringSymbolsWithinSlot     BIT STRING (SIZE (14)) OPTIONAL,   -- Cond Setup
    nrofCandidates              SEQUENCE {
        aggregationLevel1           ENUMERATED {n0, n1, n2, n3, n4, n5, n6, n8},
        aggregationLevel2           ENUMERATED {n0, n1, n2, n3, n4, n5, n6, n8},
        aggregationLevel4           ENUMERATED {n0, n1, n2, n3, n4, n5, n6, n8},
        aggregationLevel8           ENUMERATED {n0, n1, n2, n3, n4, n5, n6, n8},
        aggregationLevel16          ENUMERATED {n0, n1, n2, n3, n4, n5, n6, n8}
    }                           OPTIONAL,   -- Cond Setup
    searchSpaceType             CHOICE {
        common                      SEQUENCE {
            dci-Format0-0-AndFormat1-0          SEQUENCE {
    ...
```

The SearchSpace information element defines how and where PDCCH candidates are searched. In the prior art, a single search space is associated with a single CORESET. In contrast, in the present disclosure, a single search space may be associated/related with multiple CORESETs (e.g., two CORESETs).

That is, for a search space identified by 'searchSpaceId', the CORESETs associated with the search space may be a first CORESET identified by 'controlResourceSetId' and a second CORESET identified by 'controlResourceSetId_sbfd'. The UE may apply either the first CORESET or the second CORESET depending on whether the time resource constituting the search space is a HD symbol or a FD symbol.

That is, the UE may receive a higher layer information element that associates both the identity (ID) of the first CORESET and the ID of the second CORESET with the search space, and may apply either the first CORESET or the second CORESET depending on the type of time resources in the search space.

In some embodiments, when the time resource constituting the search space is the FD symbol, only resource element group (REG) resources within a downlink subband, among the frequency resources constituting the CORESET associated with the search space, may be used to configure a control channel element (CCE) of the search space.

Here, a CCE may be composed of six REGs, each REG comprising one symbol in the time domain and 12 subcarriers in the frequency domain.

In some embodiments, among the frequency resources constituting the CORESET related with the search space, indexing of REGs may be performed on the remaining frequency resources, excluding frequency resources other than those of the downlink subband.

These other frequency resources may be frequency resources that overlap with frequency resources of an uplink subband or frequency resources of a guard subband.

The HD symbol may be a time resource that allows the UE to perform uplink operation or downlink operation, and the FD symbol may be a time resource that allows the UE to simultaneously perform uplink operation and downlink operation using different frequency bands.

According to the method of FIG. 17, when the PDCCH search space is transmitted in FD time resources (e.g., FD slots, FD symbols) or non-FD time resources (e.g., HD slots, HD symbols) for each transmission occasion, by using/applying different appropriate CORESETs for the FD time resources and non-FD time resources, only available frequency resources can be included in the frequency resources constituting the search space. Accordingly, the UE may monitor all PDCCH candidates within the PDCCH search space in the FD time resources and non-SBFD time resources, thereby increasing communication efficiency and system throughput. In addition, power consumption can be reduced by reducing PDCCH monitoring in unnecessary frequency resources.

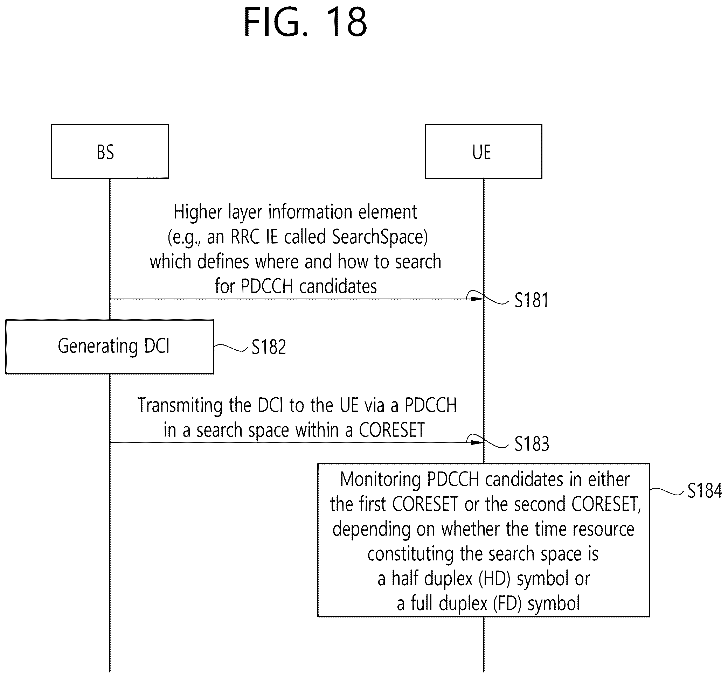

FIG. 18 illustrates the signaling and operation between a base station and a UE when applying the method of FIG. 17.

Referring to FIG. 18, the base station transmits a higher layer information element (e.g., an RRC IE called SearchSpace) to the UE, which defines where and how to search for PDCCH candidates (S181).

The base station generates DCI (S182) and transmits the DCI to the UE via a PDCCH in a search space within a CORESET (S183).

The UE monitors PDCCH candidates in either the first CORESET or the second CORESET, depending on whether the time resource constituting the search space is a half duplex (HD) symbol or a full duplex (FD) symbol (S184). The UE receives each PDCCH candidate in the search space within the corresponding CORESET and attempts to decode it according to the monitored DCI format. This is called PDCCH monitoring (or blind decoding).

Method 3. This method does not use the search space when there is overlap between a non-DL subband and a CORESET.

For a specific search space, if the frequency resources that constitute the CORESET applied to the search space overlap with the non-DL subband resources, the UE may not perform PDCCH monitoring in that search space.

That is, if the frequency resources that constitute the CORESET applied to the search space overlap with the 'non-DL subband resources', the UE does not perform PDCCH monitoring in that search space for that specific slot.

Method 4. This method excludes unavailable frequency resources from the frequency resources constituting the CORESET.

For a specific search space, considering the issue of overlapping frequency resources constituting the CORESET (some or all of the frequency resources) with non-DL subband resources in an SBFD symbol, only the remaining frequency resources, excluding the unavailable frequency resources, can be ultimately determined as the frequency resources constituting the CORESET.

When determining the frequency resources of a CORESET by excluding unavailable frequency resources, the UE may determine the frequency resources of the CORESET by excluding unavailable frequency resources even if the search space to which the CORESET applies is configured without including SBFD symbols.

In this case, 'unavailable frequency resources' may specifically refer to the following:

Option 1. This may refer to resources other than the DL subband (e.g., UL subband and/or guard subband resources). If the UE determines the frequency resources constituting the DL subband through explicit configuration/implicit determination, the frequency resources other than the DL subband may be determined as 'unavailable frequency resources.'

Option 2. The UE may be configured with information about the PRB resources constituting the 'unavailable frequency resources' from the network. This information may be configured, for example, through the ControlResourceSet IE, when configuring the CORESET. The ControlResourceSet IE may be an RRC information element used to configure the time/frequency CORESET for searching downlink control information. Alternatively, this information may be configured, for example, through the SearchSpace IE, when configuring the search space. The SearchSpace IE may be an RRC information element defining where and how to search for PDCCH candidates.

These unavailable frequency resources may be specifically configured as follows:

1) It can be configured as contiguous RB resources. For this purpose, information regarding the 'starting RB location' and 'number of RBs' can be configured. In this case, the UE may determine the contiguous RBs whose number is equal to the 'number of RBs' from the RB location corresponding to the 'starting RB location' as unavailable frequency resources.

Specifically, the location of these RB resources may: i) indicate a relative location from CRB#0; ii) indicate a relative RB location (i.e., PRB location) from the starting point of the DL BWP (i.e., $N_{BWP}^{start}$); iii) indicate a relative RB location from the first RB location of the first 6 RB group used when configuring frequency resources constituting the CORESET (i.e., $RB_{RB\ group}^{start}$).

2) And/or, the location of an unused RB group can be configured.

These RB groups can refer to RB groups used when configuring frequency resources constituting the CORESET via frequencyDomainResources. Among these RB groups, the locations of unused RB groups can be set.

For this purpose, the locations of unused RB groups can be set in bitmap format.

Depending on the embodiment, the locations of unused, contiguous RB groups can be set. For this purpose, information regarding the 'starting RB group location' and the 'number of RB groups' can be set. In this case, the UE may determine the contiguous RB groups whose number is equal to the 'number of RB groups' from the location of the RB group corresponding to the 'starting RB group location' as unavailable frequency resources.

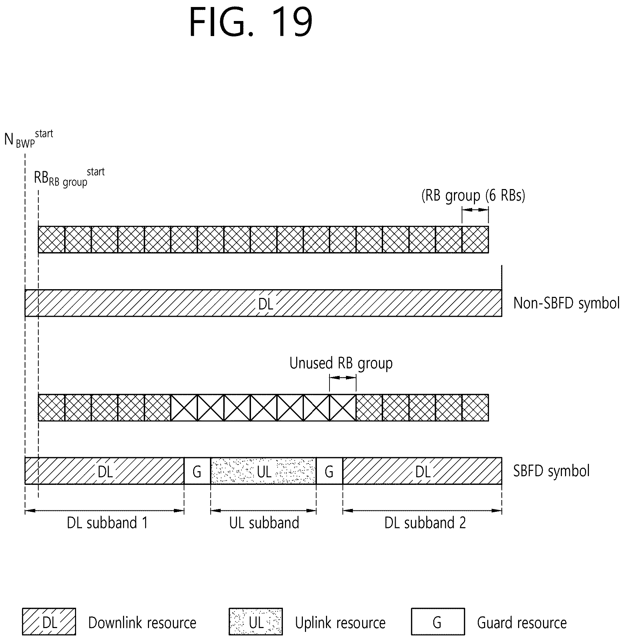

FIG. 19 illustrates an example of determining frequency resources constituting a CORESET.

Referring to FIG. 19, the vertical axis represents the time domain, and the horizontal axis represents the frequency domain. In a non-SBFD symbol, only downlink (DL) resources may exist in the frequency domain. Conversely, in an SBFD symbol, DL subbands, UL subbands, and guard resources may coexist in the frequency domain.

When an unused RB group location is set in an SBFD symbol, the UE determines the RB resources constituting the CORESET by excluding the resources corresponding to the RB group.

Whether or not to apply an operation to exclude unavailable frequency resources from the frequency resources constituting the CORESET to determine which frequency resources constitute the CORESET can be configured by the network to the UE. This information regarding whether to exclude unavailable frequency resources can be configured during CORESET configuration, for example, via the ControlResourceSet IE. Alternatively, this information can be configured during search space configuration, for example, via the SearchSpace IE. This allows the network to configure the CORESET applied to the search space to consist of frequency resources within the DL subband, if the search space likely includes SBFD symbols.

If the UE is indicated to exclude unavailable frequency resources from the frequency resources constituting the CORESET, only the remaining frequency resources, excluding the unavailable frequency resources, among the frequency resources configured as the CORESET are ultimately determined to be the frequency resources constituting the CORESET. Otherwise, the unavailable frequency resources are not excluded from the CORESET configuration, and the frequency resources configured as the CORESET are ultimately determined to be the frequency resources constituting the CORESET.

Approach 2. An approach that applies frequency resources that constitute the CORESET differently to SBFD and non-SBFD symbols.

For a specific CORESET, the UE may determine the frequency resources constituting the CORESET differently for SBFD and non-SBFD symbols to prevent overlap with non-DL subband resources (i.e., UL subbands and/or guard subbands).

In this case, if all the time (symbol) resources constituting the search space in a specific slot are non-SBFD symbols, the UE may determine the frequency resources constituting the CORESET for the search space in that slot based on the non-SBFD symbols. Conversely, if the symbol resources constituting the search space in a specific slot include at least one SBFD symbol, the UE may determine the frequency resources constituting the CORESET for the search space in that slot based on the SBFD symbols.

Here, determining the frequency resources that constitute a CORESET based on non-SBFD symbols may mean applying a legacy method to determine the frequency resources that constitute a CORESET.

Furthermore, determining the frequency resources that constitute a CORESET based on SBFD symbols may mean determining the frequency resources that constitute a CORESET using at least one of the following methods, different from the legacy method, to ensure that non-DL subband resources are not included in the CORESET, taking into account non-DL subband resources.

Specifically, the following methods may be used for determination.

Method 1. Excluding unavailable frequency resources from a CORESET.

For a specific CORESET, the same frequency allocation is applied to both SBFD and non-SBFD symbols. However, the UE determines the frequency resources that comprise the CORESET by excluding some frequency resources from the SBFD symbols.

More specifically, when determining the frequency resources that comprise the CORESET based on non-SBFD symbols, the UE applies the 'frequencyDomainResources' and 'rb-Offset' parameters within the ControlResourceSet IE, as before, to determine the frequency resources that comprise the CORESET.

When determining the frequency resources that comprise the CORESET based on SBFD symbols, the UE applies the 'frequencyDomainResources' and 'rb-Offset' parameters within the ControlResourceSet IE, as before, to determine the frequency resources, and then excludes the 'unavailable frequency resources' from the determined frequency resources, ultimately determining the frequency resources that comprise the CORESET.

In this case, 'unavailable frequency resources' may specifically refer to the following:

Option 1. 'Unavailable frequency resources' may refer to resources other than DL subbands (UL subbands and/or guard subband resources). If the UE determines the frequency resources constituting the DL subbands through explicit configuration or implicit determination, the frequency resources other than the DL subbands may be considered 'unavailable frequency resources.'

Option 2. The UE may be configured with information about the PRB resources constituting the 'unavailable frequency resources' from the network. In other words, the 'unavailable frequency resources' may be resources that have been separately designated as unavailable frequencies by the network. This information may be configured, for example, during the configuration of the CORESET via the ControlResourceSet IE. Alternatively, this information may be configured, for example, during the configuration of the search space via the SearchSpace IE.

The unavailable frequency resources may be configured as follows:

1) They may be configured as contiguous RB resources. To this end, information regarding the 'starting RB location' and 'number of RBs' may be configured. In this case, the UE may determine the contiguous RBs whose number is equal to the 'number of RBs' from the RB location corresponding to the 'starting RB location' as unavailable frequency resources.

Specifically, the location of these RB resources may: i) indicate a relative location from CRB#0; ii) indicate a relative RB location (i.e., PRB location) from the starting point of the DL BWP (i.e., $N_{BWP}^{start}$); iii) indicate a relative RB location from the first RB location of the first 6 RB group used when configuring frequency resources constituting the CORESET (i.e., $RB_{RB\ group}^{start}$).

2) and/or the location of unused RB groups may be configured.

These RB groups can refer to RB groups used when configuring frequency resources constituting the CORESET via 'frequencyDomainResources' during CORESET configuration. The location of unused RB groups among these RB groups may be configured.

For this purpose, the location of unused RB groups may be configured in bitmap format.

Alternatively, the locations of unused, contiguous RB groups may be set. For this purpose, information regarding the 'starting RB group location' and the 'number of RB groups' may be set. In this case, the UE may determine the contiguous RB groups whose number is equal to the 'number of RB groups' from the RB group location corresponding to the 'starting RB group location' as unavailable frequency resources. That is, as shown in FIG. 19, when the location of an unused RB group is set in an SBFD symbol, the UE determines the RB resources constituting the CORESET by excluding the resources corresponding to the corresponding RB group.

At this time, if the unavailable frequency resources overlap with some RBs among the RB group (6 RB group) constituting the CORESET, all RBs included in the corresponding RB group can be excluded from the frequency resources constituting the CORESET. For example, when determining a non-DL subband resource as an 'unavailable frequency resource', the UE may determine an RB group including frequency resources used as an UL subband and a guard subband (guard resources) in the SBFD symbol in FIG. 19 as an unavailable frequency resource (unused RB group).

Method 2. A method of configuring independent frequency resources applied to SBFD Symbols.

For a specific CORESET, the UE may be separately configured with the frequency resources that comprise the CORESET in the SBFD symbol, allowing the UE to determine the frequency resources of the CORESET applied in the SBFD symbol.

More specifically, when determining the frequency resources that comprise the CORESET based on non-SBFD symbols, the UE applies the 'frequencyDomainResources' and 'rb-Offset' within the ControlResourceSet IE as before to determine the frequency resources that comprise the CORESET.

When determining the frequency resources that comprise the CORESET based on SBFD symbols, the UE receives additional frequency resource configuration information from the network and uses this information to determine the frequency resources that comprise the CORESET. To this end, the UE may be configured with additional 'frequencyDomainResources' information (hereinafter, referred to as 'frequencyDomainResources_sbfd' for convenience) applied to the SBFD symbol in addition to the existing 'frequencyDomainResources' information through the ControlResourceSet IE.

More specifically, the UE may be configured with additional 'frequencyDomainResources' information (i.e., 'frequencyDomainResources_sbfd') applied in the SBFD symbol as follows.

Option 1. 'frequencyDomainResources_sbfd' may be configured in the same manner as 'frequencyDomainResources'. Therefore, RB group information configuring a CORESET for multiple 6 RB groups can be indicated in bitmap format. In this case, the UE assumes that 'frequencyDomainResources_sbfd' is configured so as not to overlap with non-DL subband locations.

At this time, the $RB_{RB\ group}^{start}$ used to indicate RB group information through 'frequencyDomainResources_sbfd' may be identical to the $RB_{RB\ group}^{start}$ used for the existing 'frequencyDomainResources'. That is, if 'rb-Offset' is not configured, the UE considers $6 \cdot \left\lceil N_{BWP}^{start}/6 \right\rceil$ as the $RB_{RB\ group}^{start}$. If 'rb-Offset' is configured, the UE considers $N_{BWP}^{start}+N_{RB}^{offset}$ (where $N_{RB}^{offset}$ is provided by 'rb-Offset') as the $RB_{RB\ group}^{start}$.

Alternatively, the $RB_{RB\ group}^{start}$ used to indicate RB group information via 'frequencyDomainResources_sbfd' may differ from the $RB_{RB\ group}^{start}$ used for the existing 'frequencyDomainResources'.

To this end, an additional 'rb-Offset' value (let's call this 'rb-Offset_sbfd') may be configured by the network to the UE. In this case, the UE may use 'rb-Offset_sbfd' to determine the first RB of the first 6 RB group of the RB group information indicated by 'frequencyDomainResources_sbfd'.

More specifically, if 'rb-Offset _sbfd' is set, the UE determines $N_{BWP}^{start}+N_{RB}^{offset2}$ (where $N_{RB}^{offset2}$ is provided by 'rb-Offset_sbfd') as the $RB_{RB\,group}^{start}$ for 'frequencyDomainResources_sbfd'.

If 'rb-Offset_sbfd' is not set, the UE determines $6 \cdot \lceil N_{BWP}^{start}/6 \rceil$ as the $RB_{RB\,group}^{start}$ for 'frequencyDomainResources_sbfd'.

Alternatively, the UE determines the $RB_{RB\,group}^{start}$ information used for 'frequencyDomainResources' as the $RB_{RB\,group}^{start}$ for 'frequencyDomainResources_sbfd'.

Option 2. The RB group information for configuring a CORESET for multiple 6-RB groups is indicated in bitmap format via 'frequencyDomainResources_sbfd'.At this time, the multiple 6-RB groups indicated via 'frequencyDomainResources_sbfd' are configured to not include non-DL subband resources.

That is, the 6-RB groups indicated via 'frequencyDomainResources_sbfd' are configured with 6 contiguous RBs in order from the $RB_{RB\,group}^{start}$ position, but exclude 6-RB groups that include non-DL subband resources.

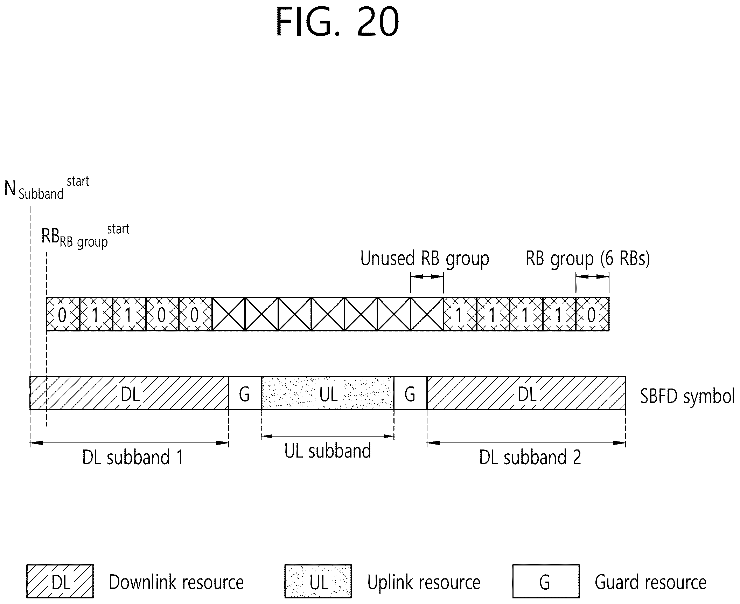

FIG. 20 illustrates frequency resources that constitute a CORESET.

Referring to FIG. 20, when RB groups containing non-DL subband resources are referred to as 'unused RB groups,' these RB groups are excluded from the RB groups indicated by 'frequencyDomainResources_sbfd.'

As shown in FIG. 20, if RB groups 0 through 16 exist, and the 5th through 11th RB groups contain non-DL subband resources, the locations of the RB groups that constitute a CORESET, among the remaining 10 RB groups excluding the 5th through 11th RB groups, are indicated through a 10-bit bitmap by 'frequencyDomainResources_sbfd.'

For example, if a bitmap of '0110011110' is indicated through 'frequencyDomainResources_sbfd', as shown in FIG. 20, each bit is sequentially applied to 10 RB groups excluding 'unused RB groups'.

At this time, the $RB_{RB\,group}^{start}$ used to indicate RB group information via 'frequencyDomainResources_sbfd' may be identical to the $RB_{RB\,group}^{start}$ used for the existing 'frequencyDomainResources'. Specifically, if 'rb-Offset' is not set, the UE may identify $6 \cdot \lceil N_{BWP}^{start}/6 \rceil$ as the $RB_{RB\,group}^{start}$. If 'rb-Offset' is set, the UE may identify $N_{BWP}^{start}+N_{RB}^{offset}$ (where $N_{RB}^{offset}$ is provided by 'rb-Offset') as the $RB_{RB\,group}^{start}$.

Alternatively, the $RB_{RB\,group}^{start}$ used to indicate RB group information via 'frequencyDomainResources_sbfd' may differ from the $RB_{RB\,group}^{start}$ used for the existing 'frequencyDomainResources'.

To this end, an additional 'rb-Offset' (i.e., 'rb-Offset_sbfd') value may be configured by the network to the UE. In this case, the UE may use 'rb-Offset_sbfd' to determine the first RB of the first 6 RB group of the RB group information indicated by 'frequencyDomainResources_sbfd'.

More specifically, if 'rb-Offset _sbfd' is set, the UE determines $N_{BWP}^{start}+N_{RB}^{offset2}$ (where $N_{RB}^{offset2}$ is provided by 'rb-Offset_sbfd') as the $RB_{RB\,group}^{start}$ for 'frequencyDomainResources_sbfd'.

If 'rb-Offset_sbfd' is not set, the UE determines $6 \cdot \lceil N_{BWP}^{start}/6 \rceil$ as the $RB_{RB\,group}^{start}$ for 'frequencyDomainResources_sbfd'.

Alternatively, the UE determines the $RB_{RB\,group}^{start}$ information used for 'frequencyDomainResources' as the $RB_{RB\,group}^{start}$ for 'frequencyDomainResources_sbfd'.

Option 3. For RB groups included in a single DL subband in an SBFD symbol, information about the RB groups that make up the CORESET can be indicated in bitmap format via 'frequencyDomainResources_sbfd'.

When a DL subband consists of contiguous RB resources, and a SBFD symbol contains a single DL subband, the RB group information configuring the CORESET among the RB groups included in the DL subband is indicated in bitmap format through 'frequencyDomainResources_sbfd'.

At this time, the $RB_{RB\,group}^{start}$ used to indicate RB group information via 'frequencyDomainResources_sbfd' can be determined as follows:

Alt 1. Method of applying the same RB offset as in non-SBFD symbols.

The $RB_{RB\,group}^{start}$ used to indicate RB group information via 'frequencyDomainResources_sbfd' may be identical to the $RB_{RB\,group}^{start}$ used for the existing 'frequencyDomainResources'. That is, if 'rb-Offset' is not set, the UE considers $6 \cdot \lceil N_{BWP}^{start}/6 \rceil$ as $RB_{RB\,group}^{start}$. If 'rb-Offset' is set, it considers $N_{BWP}^{start}+N_{RB}^{offset}$ (where $N_{RB}^{offset}$ is provided by 'rb-Offset') as $RB_{RB\,group}^{start}$.

Alt 2. Method of applying different RB offsets than in non-SBFD symbols.

The RB offset is determined based on the starting point of the DL BWP. The $RB_{RB\,group}^{start}$ used to indicate RB group information via 'frequencyDomainResources_sbfd' may differ from the $RB_{RB\,group}^{start}$ used for the existing 'frequencyDomainResources'.

For this purpose, an additional 'rb-Offset' (i.e., 'rb-Offset _sbfd') value may be set from the network to the UE. In this case, the UE may use 'rb-Offset_sbfd' to determine the first RB of the first 6 RB group of the RB group information indicated by 'frequencyDomainResources_sbfd'.

More specifically, when 'rb-Offset_sbfd' is set, the UE determines $N_{BWP}^{start}+N_{RB}^{offset2}$ (where $N_{RB}^{offset2}$ is provided by 'rb-Offset_sbfd') as $RB_{RB\,group}^{start}$ for 'frequencyDomainResources_sbfd'.

If 'rb-Offset_sbfd' is not set, the UE considers $6 \cdot \lceil N_{\text{BWP}}^{\text{start}}/6 \rceil$ as the $RB_{\text{RB group}}^{\text{start}}$ for 'frequencyDomainResources_sbfd'.

Alternatively, the UE considers the $RB_{\text{RB group}}^{\text{start}}$ information used for 'frequencyDomainResources' as the $RB_{\text{RB group}}^{\text{start}}$ for 'frequencyDomainResources_sbfd'.

Alt 3. Method of applying a different RB offset than in non-SBFD symbols.

The RB offset may be determined based on the start point of the DL subband. The $RB_{\text{RB group}}^{\text{start}}$ used to indicate RB group information via 'frequencyDomainResources_sbfd' may differ from the $RB_{\text{RB group}}^{\text{start}}$ used for the existing 'frequencyDomainResources'.

To this end, an additional 'rb-Offset' (i.e., 'rb-Offset_sbfd') value may be configured by the network to the UE. In this case, the UE may use 'rb-Offset _sbfd' to determine the first RB of the first 6 RB group of the RB group information indicated by 'frequencyDomainResources_sbfd'.

More specifically, when 'rb-Offset_sbfd' is set, the UE determines $N_{\text{DL subband}}^{\text{start}}+N_{\text{RB}}^{\text{offset2}}$ (where $N_{\text{RB}}^{\text{offset2}}$ is provided by 'rb-Offset_sbfd') as the $RB_{\text{RB group}}^{\text{start}}$ for 'frequencyDomainResources_sbfd'. At this time, $N_{\text{DL subband}}^{\text{start}}$ may refer to the position (common RB index) of the first RB constituting the DL subband.

If 'rb-Offset_sbfd' is not set, the UE determines $6 \cdot \lceil N_{\text{DL subband}}^{\text{start}}/6 \rceil$ as the $RB_{\text{RB group}}^{\text{start}}$ for 'frequencyDomainResources_sbfd'. At this time, $N_{\text{DL subband}}^{\text{start}}$ may refer to the position (common RB index) of the first RB constituting the DL subband.

When a DL subband consists of contiguous RB resources and two DL subbands exist in an SBFD symbol, information about the RB groups that constitute the CORESET within the RB groups included in one DL subband may be indicated in bitmap format via 'frequencyDomainResources_sbfd.'

In this case, the information indicated via 'frequencyDomainResources_sbfd' may be extended to apply to a specific subband or to both subbands. To achieve this, the network may configure the UE with information regarding the subband to which 'frequencyDomainResources_sbfd' information applies. For example, information regarding the subband to which 'frequencyDomainResources_sbfd' information applies can be configured using a bitmap. At this time, the bitmap values 01, 10, and 11 may mean that they are applied only to the first DL subband, only to the second DL subband, and both DL subbands, respectively. This configuration information may be included in the ControlResourceSet IE and set together when setting up the CORESET, for example. Alternatively, this configuration information may be set when setting up the search space via the SearchSpace IE.

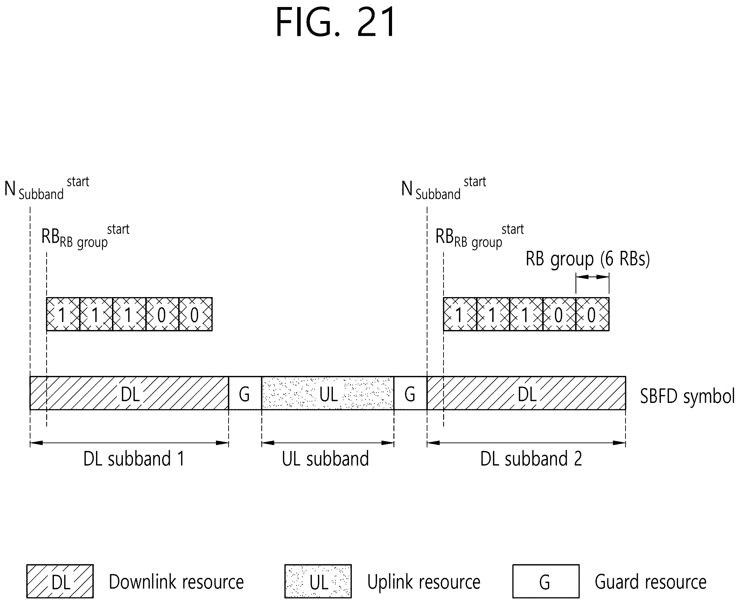

FIG. 21 illustrates a case where the 'frequencyDomainResources_sbfd' information is extended and applied to both DL subbands.

Referring to FIG. 21, a bitmap value of '11100' is indicated via 'frequencyDomainResources_sbfd,' and the corresponding information can be applied to both DL subbands. In this case, the same bitmap value of '11100' is applied to the five RB groups within DL subband 1 and the five RB groups within DL subband 2

At this time, the first RB of the 6 RB groups for each DL subband, $RB_{\text{RB group}}^{\text{start}}$, may be determined as follows: Alt 1. The UE determines $RB_{\text{RB group}}^{\text{start}}$ based on the starting RB position of each DL subband.

To this end, if the UE has been configured with 'rb-Offset' to determine the $RB_{\text{RB group}}^{\text{start}}$ for 'frequencyDomainResources', the UE determines the $RB_{\text{RB group}}^{\text{start}}$ for each DL subband through 'frequencyDomainResources_sbfd' in the SBFD symbol as $N_{\text{DL subband}}^{\text{start}}+N_{\text{RB}}^{\text{offset}}$ (where $N_{\text{RB}}^{\text{offset}}$ is provided by 'rb-Offset').

If the UE has not been configured with 'rb-Offset' to determine the $RB_{\text{RB group}}^{\text{start}}$ for 'frequencyDomainResources', the UE determines the $RB_{\text{RB group}}^{\text{start}}$ for each DL subband through 'frequencyDomainResources_sbfd' in the SBFD symbol as $6 \cdot \lceil N_{\text{DL subband}}^{\text{start}}/6 \rceil$. In this case, the $N_{\text{DL subband}}^{\text{start}}$ may refer to the position (common RB index) of the first RB constituting each DL subband.

Alt 2. The UE determines the $RB_{\text{RB group}}^{\text{start}}$ based on the starting RB position of each DL subband and the UE is configured with a new 'rb-Offset' value (i.e., 'rb-Offset_sbfd') applied to 'frequencyDomainResources_sbfd.'

In this case, the UE may use 'rb-Offset_sbfd' to determine the first RB of the first 6 RB group of the RB group information indicated by 'frequencyDomainResources_sbfd.'

More specifically, when 'rb-Offset_sbfd' is set, the UE determines $N_{\text{DL subband}}^{\text{start}}+N_{\text{RB}}^{\text{offset2}}$ (where $N_{\text{RB}}^{\text{offset2}}$ is provided by 'rb-Offset_sbfd') as the $RB_{\text{RB group}}^{\text{start}}$ for each DL subband. Here, $N_{\text{DL subband}}^{\text{start}}$ may refer to the position (common RB index) of the first RB constituting each DL subband.

If 'rb-Offset_sbfd' is not set, the UE determines $6 \cdot \lceil N_{\text{DL subband}}^{\text{start}}/6 \rceil$ as the $RB_{\text{RB group}}^{\text{start}}$ for 'frequencyDomainResources_sbfd'. At this time, the $N_{\text{DL subband}}^{\text{start}}$ may indicate the location (common RB index) of the first RB constituting the DL subband.

At this time, the 'rb-Offset_sbfd' value may be set independently for the two DL subbands. In this case, the UE determines the locations of the RB groups in the corresponding DL subband by applying the 'rb-Offset_sbfd' value corresponding to each DL subband.

Alt 3. The UE determines the $RB_{\text{RB group}}^{\text{start}}$ based on the starting RB position of the DL BWP. For the first DL subband, the RB group position is determined using the existing 'rb-Offset' value. For the second DL subband, the RB group position is determined using the new 'rb-Offset' value (i.e., 'rb-Offset_sbfd').

In this case, the UE may use the existing 'rb-Offset' information and 'rb-Offset_sbfd' to determine the first RB of the first 6 RB group indicated by 'frequencyDomainResources_sbfd.'

More specifically, if 'rb-Offset' is set, the UE determines $N_{BWP}^{start}+N_{RB}^{offset}$ (where $N_{RB}^{offset}$ is provided by 'rb-Offset') as the $RB_{RB\,group}^{start}$ in the first DL subband (the DL subband composed of lower frequency resources among the two DL subbands).

If 'rb-Offset' is not set, the UE determines $6 \cdot \left\lceil N_{BWP}^{start}/6 \right\rceil$ as the $RB_{RB\,group}^{start}$ in the first DL subband (the DL subband composed of lower frequency resources).

If 'rb-Offset_sbfd' is set, the UE determines $N_{BWP}^{start}+N_{RB}^{offset2}$ (where $N_{RB}^{offset2}$ is provided by 'rb-Offset_sbfd') as the $RB_{RB\,group}^{start}$ in the second DL subband (the DL subband composed of higher frequency resources among the two DL subbands).

If 'rb-Offset_sbfd' is not set, the UE considers $6 \cdot \left\lceil N_{BWP}^{start}/6 \right\rceil$ as the $RB_{RB\,group}^{start}$ in the second DL subband (the DL subband composed of higher frequency resources).

Method 3. Method of reusing frequency resource information applied in SBFD symbols, but applying independent RB offsets.

For a specific CORESET, the same 'frequencyDomainResources' information may be applied to SBFD and non-SBFD symbols, but different $RB_{RB\,group}^{start}$ may be applied to non-SBFD and SBFD symbols.

To achieve this, the UE may be configured with new 'rb-Offset' information (i.e., 'rb-Offset_sbfd') applied to SBFD symbols from the network.

More specifically, when determining the frequency resources that comprise a CORESET based on non-SBFD symbols, the UE applies the 'frequencyDomainResources' and 'rb-Offset' information within the ControlResourceSet IE, as before, to determine the frequency resources that comprise the CORESET.

When determining the frequency resources that constitute a CORESET based on the SBFD symbol, the UE applies the existing 'frequencyDomainResources', but applies the new 'rb-Offset' information (i.e., 'rb-Offset_sbfd') applied to the SBFD symbol to determine the locations of RB groups corresponding to the information indicated through 'frequencyDomainResources'.

Approach 3. A method that does not use resources that overlap with resources other than DL subbands within a CORESET.

Even if the frequency resources configured as a CORESET for a specific CORESET overlap with 'non-DL subband resources' (i.e., UL subbands and/or guard subbands), the UE may determine that the frequency resources constituting the CORESET are identical in both SBFD and non-SBFD symbols.

However, in SBFD symbols, the resources for PDCCH transmission within the frequency resources constituting the CORESET can be configured differently from those in non-SBFD symbols, taking into account 'non-DL subband resources.'

More specifically, the following methods may be applied:

Method 1. Method of performing REG indexing by excluding non-DL subband resources.

REG indexing can be performed differently for non-SBFD and SBFD symbols. In this case, when the search space in a specific slot includes an SBFD symbol, REG indexing is performed by excluding REG resources containing 'non-DL subband' resources when determining REG indices for REGs within the CORESET.

That is, REG indexing is performed sequentially in a time-first manner, starting from the first OFDM symbol constituting the search space and the lowest-numbered RB position constituting the CORESET, wherein the UE skips REG containing RB resources corresponding to 'non-DL subbands' and determines the REG index.

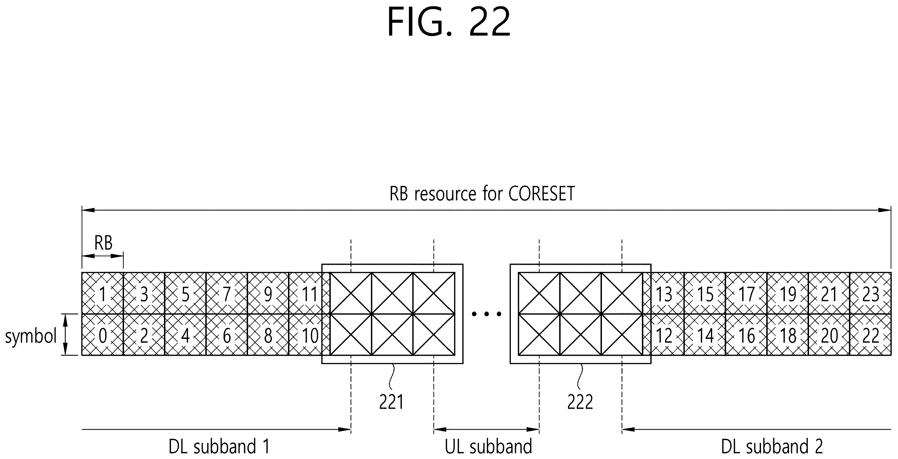

FIG. 22 illustrates a REG indexing method.

In FIG. 22, each number displayed within an RB represents the resource and REG index constituting each REG. In FIG. 22, the horizontal axis represents the frequency domain, and the vertical axis represents the time domain. In this case, as illustrated in FIG. 22, REG indexing is performed continuously, excluding resources containing non-DL subbands. First, REGs with a first frequency are indexed in the time domain. After this process is completed, REGs with a second frequency (the next frequency) are indexed in the time domain.

At this time, if a specific RB group constituting a CORESET overlaps with a 'non-DL subband' resource, REG indexing can be performed excluding all REGs within that RB group.

Method 2. Method of mapping CCE and REG excluding non-DL subband resource.

CCE to REG mapping may be performed differently for non-SBFD and SBFD symbols. That is, the REGs that constitute a CCE may be determined differently for non-SBFD and SBFD symbols.

In this case, if the search space in a specific slot includes an SBFD symbol, each CCE is constructed by excluding REGs containing non-DL subband resources.

To achieve this, the existing CCE to REG mapping rules may be reused, but REGs containing non-DL subband resources may be skipped to determine the REG resources that constitute each CCE. For example, if REGs #K ~ REG #K+A-1 contain non-DL subband resources, the UE constructs a CCE using REG #n+A instead of REG #n when n is greater than or equal to K (n >= K). That is, if REG #n (where n >= K) is included in the REG resources that constitute a CCE, the UE determines REG #n+A as the REG resource constituting the CCE instead of REG #n.

Alternatively, the existing CCE to REG mapping rule may be reused, but if a specific RB group constituting the CORESET overlaps with a 'non-DL subband' resource, the REG(s) within that RB group may be skipped to determine the REG resource constituting each CCE.

For example, if REG #K ~ REG #K+A-1 exist within an RB group that includes non-DL subband resources, the UE configures the CCE using REG #n+A instead of REG #n when n is greater than or equal to K (n >= K). That is, if REG #n (where n>=K) is included in the REG resources that constitute each CCE, the UE determines REG #n+A instead of REG #n as the REG resource that constitutes the CCE.

Method 3. Method of mapping PDCCH candidates to CCEs, excluding non-DL subband resources.

The mapping of PDCCH candidates to CCEs is performed differently for non-SBFD and SBFD symbols. That is, the CCEs constituting the PDCCH candidates are determined differently for non-SBFD and SBFD symbols.

In this case, if the search space in a specific slot includes an SBFD symbol, each PDCCH candidate is configured by excluding the CCE(s) containing non-DL subband resources.

To achieve this, the existing PDCCH candidate-to-CCE mapping rule is reused, but the CCE(s) containing non-DL subband resources are skipped to determine the CCE resources constituting each PDCCH candidate.

For example, if CCE #L ~ CCE #L+B-1 include non-DL subband resources, the UE configures a PDCCH candidate using CCE #m+B instead of CCE #m for the case where m is greater than or equal to L (where m >= L). That is, if the CCE resources configuring each PDCCH candidate include CCE #m (where m>=L), the UE determines CCE #m+B instead of CCE #m as the CCE resource configuring the PDCCH candidate.

Method 4. Method in which the UE does not monitor PDCCH candidates if they are mapped to one or more REs that overlap with REs outside the DL subband(s).

If the RE resources constituting each PDCCH candidate within the search space within a specific slot include RE resources not included in the DL subband, the UE does not monitor the corresponding PDCCH candidate.

When applying non-interleaved CCE-to-REG mapping, the RE resources constituting each PDCCH candidate are clustered in adjacent frequency resources, minimizing the number of PDCCH candidates that are not included in the DL subband and therefore unusable.

However, when applying interleaved CCE-to-REG mapping, the RE resources constituting each PDCCH candidate are distributed across the frequency resources constituting the CORESET, which may result in a large number of unusable PDCCH candidates. Therefore, this method may not be appropriate when applying interleaved CCE-to-REG mapping.

Considering this, only CORESETs with non-interleaved CCE-to-REG mappings may be used in SBFD symbols.

In this case, the UE may assume that the CORESET with a non-interleaved CCE-to-REG mapping applies to the search space within the SBFD symbol.

Alternatively, if the symbol resources in which the search space exists include SBFD symbols, the UE assumes that the CORESET of the search space always applies non-interleaved CCE-to-REG mapping. In this case, it may be assumed that the CORESET of the search space always applies a non-interleaved CCE-to-REG mapping for all occasions, even if the search space that exists periodically contains SBFD symbols only in some occasions.

Alternatively, if the symbol resources in which the search space exists in a specific slot include SBFD symbols, the UE assumes that the CORESET of the search space in that slot always applies non-interleaved CCE-to-REG mapping. In this case, if the CORESET applies interleaved CCE-to-REG mapping, the non-interleaved CCE-to-REG mapping may be applied only to the search space containing SBFD symbols.

Alternatively, this method may be applied to CORESETs that apply non-interleaved CCE-to-REG mapping, and another method (e.g., Approach 2 described above) may be applied to CORESETs that have interleaved CCE-to-REG mapping.

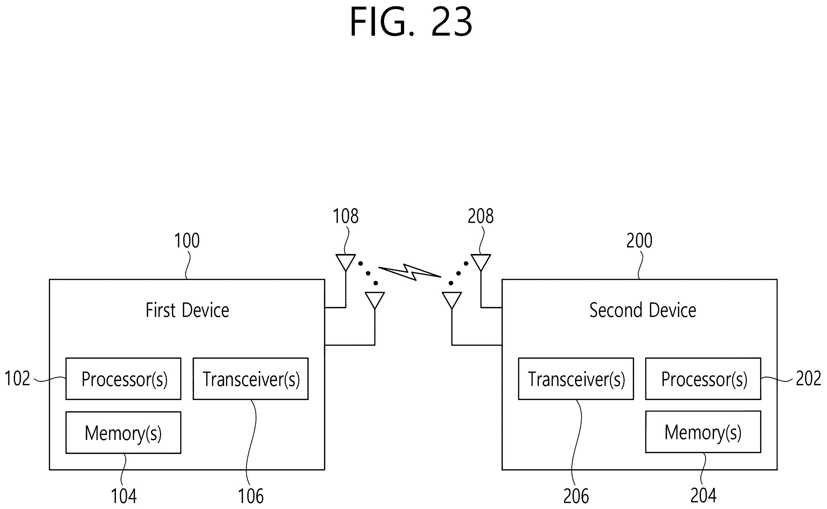

FIG. 23 illustrates a wireless device applicable to the present specification.

Referring to FIG. 23, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory 102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip. The processor 102 monitors PDCCH candidates in a CORESET according to a search space, and receives downlink control information (DCI) through the monitoring, wherein the CORESET is determined as a first CORESET or a second CORESET depending on whether the time resource constituting the search space is a half duplex (HD) symbol or a full duplex (FD) symbol.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip. The processor 202 generates downlink control information (DCI) and transmits the DCI to the UE via a PDCCH in a search space within a CORESET. At this time, the CORESET is determined as the first CORESET or the second CORESET depending on whether the time resource constituting the search space is a half duplex (HD) symbol or a full duplex (FD) symbol.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer-readable medium (CRM) including instructions based on being executed by at least one processor performs the steps of monitoring PDCCH candidates in a CORESET according to a search space, and receiving downlink control information (DCI) through the monitoring. At this time, the CORESET is determined as a first CORESET or a second CORESET depending on whether a time resource constituting the search space is a half duplex (HD) symbol or a full duplex (FD) symbol.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

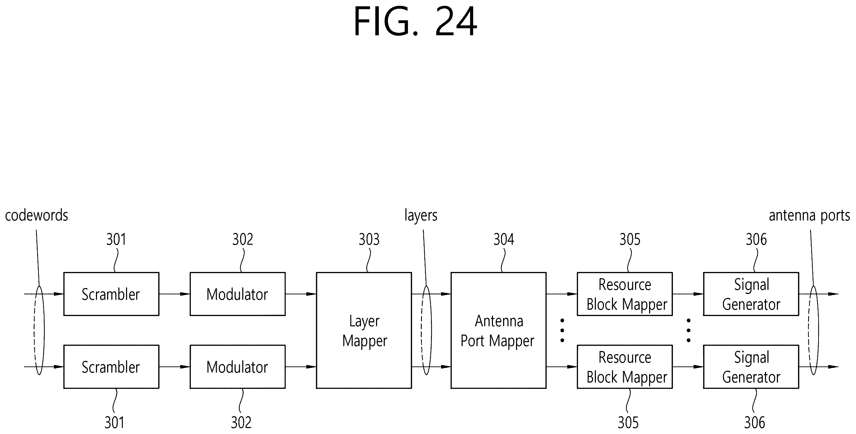

FIG. 24 shows an example of a structure of a signal processing module. Herein, signal processing may be performed in the processors 102 and 202 of FIG. 23.

Referring to FIG. 24, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

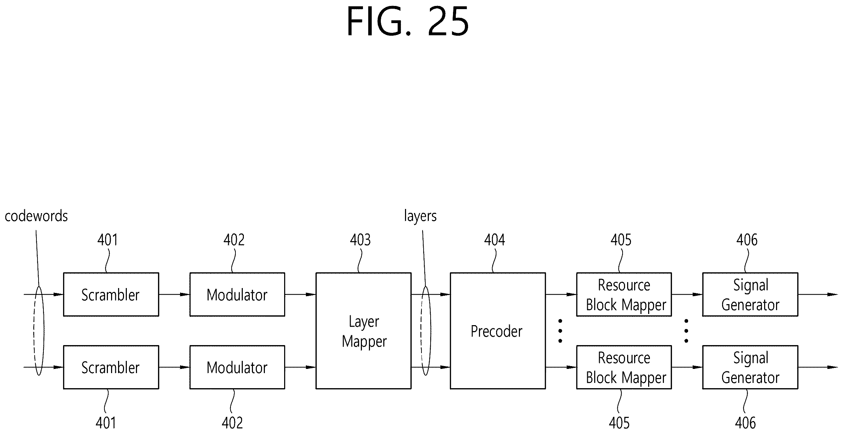

FIG. 25 shows another example of a structure of a signal processing module in a transmitting device. Herein, signal processing may be performed in a processor of a UE/BS, such as the processors 102 and 202 of FIG. 23.

Referring to FIG. 25, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

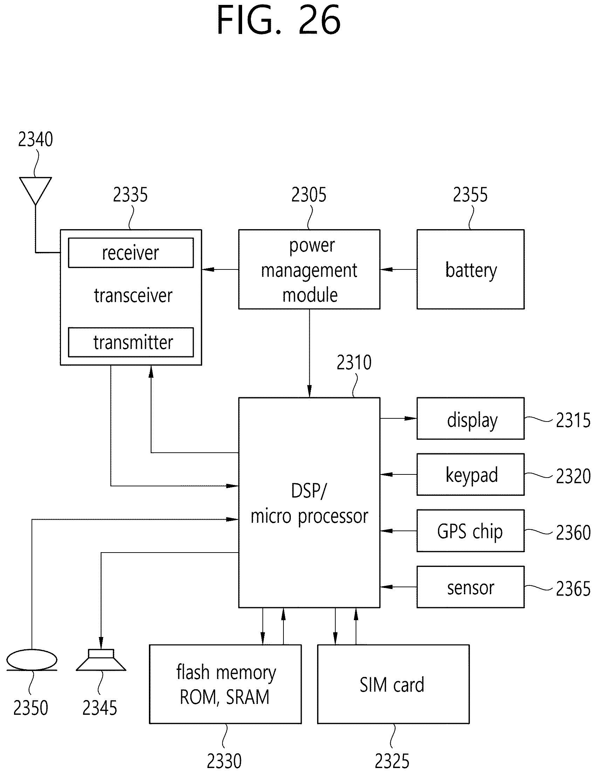

FIG. 26 illustrates an example of a wireless communication device according to an implementation example of the present disclosure.

Referring to FIG. 26, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 26 may be the processors 102 and 202 in FIG. 23.

The memory 2330 is connected to the processor 2310 and stores information related to operations of the processor. The memory may be located inside or outside the processor and connected to the processor through various techniques such as wired connection and wireless connection. The memory 2330 in FIG. 26 may be the memories 104 and 204 in FIG. 23.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

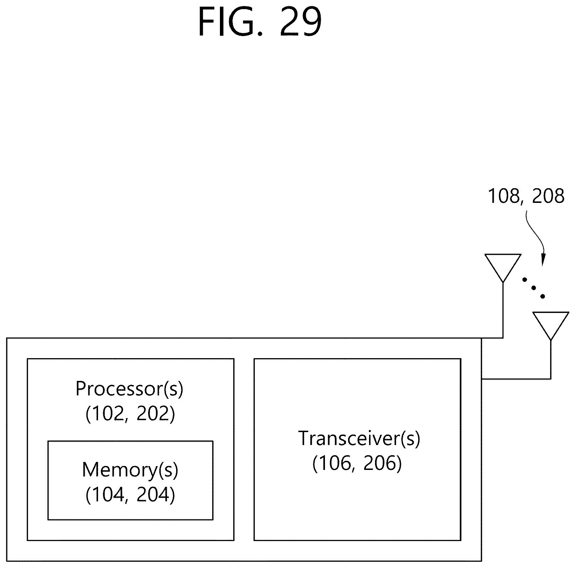

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 26 may be the transceivers 106 and 206 in FIG. 29.

Although not shown in FIG. 26, various components such as a camera and a universal serial bus (USB) port may be additionally included in the UE. For example, the camera may be connected to the processor 2310.

FIG. 26 is an example of implementation with respect to the UE and implementation examples of the present disclosure are not limited thereto. The UE need not essentially include all the components shown in FIG. 26. That is, some of the components, for example, the keypad 2320, the GPS chip 2360, the sensor 2365 and the SIM card 2325 may not be essential components. In this case, they may not be included in the UE.

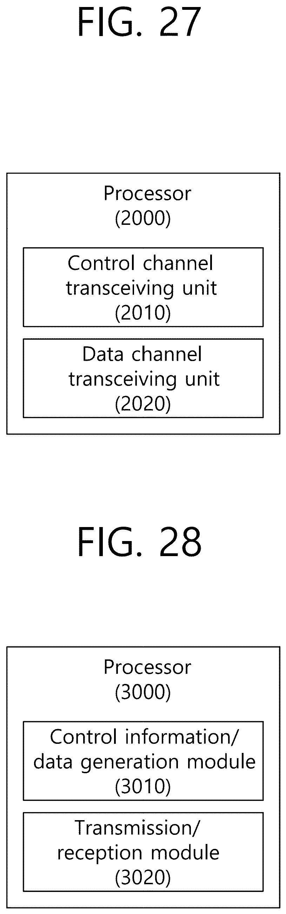

FIG. 27 shows an example of the processor 2000.

Referring to FIG. 27, The processor 2000 may include a control channel transceiver 2010 and a data channel transceiver 2020. For example, the processor 2000 may execute the methods described in FIGS. 16 to 22 from the UE perspective. The processor 2000 may be an example of the processors 102 and 202 of FIG. 23.

FIG. 28 shows an example of the processor 3000.

Referring to FIG. 28, The processor 3000 may include a control information/data generation module 3010 and a transmit/receive module 3020. The processor 3000 may execute the methods described in FIGS 16 to 22, for example, from the perspective of a base station or network. The processor 3000 may be an example of the processors 102, 202 of FIG. 23.

FIG. 29 shows another example of a wireless device.

Referring to FIG. 29, the wireless device may include one or more processors 102 and 202, one or more memories 104 and 204, one or more transceivers 106 and 206 and one or more antennas 108 and 208.

The example of the wireless device described in FIG. 29 is different from the example of the wireless described in FIG. 23 in that the processors 102 and 202 and the memories 104 and 204 are separated in FIG. 23 whereas the memories 104 and 204 are included in the processors 102 and 202 in the example of FIG. 29. That is, the processor and the memory may constitute one chipset.

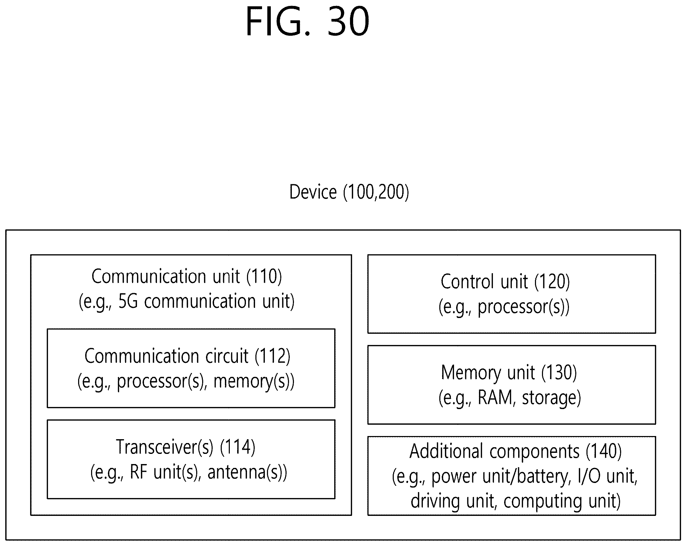

FIG. 30 shows another example of a wireless device applied to the present specification. The wireless device may be implemented in various forms according to a use-case/service.

Referring to FIG. 30, wireless devices 100 and 200 may correspond to the wireless devices 100 and 200 of FIG. 23 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 23. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot 100a of FIG. 34, the vehicles 100b-1, 100b-2 of FIG. 34, the XR device 100c of FIG. 34, the hand-held device 100d of FIG. 34, the home appliance 100e of FIG. 34, the IoT device 100f of FIG. 34, a digital broadcast UE, a hologram device, a public safety device, an MTC device, a medicine device, a fintech device (or a finance device), a security device, a climate/environment device, the AI server/device 400 of FIG. 34, the BSs 200 of FIG. 34, a network node, etc. The wireless device may be used in a mobile or fixed place according to a use-example/service.

In FIG. 30, various elements, components, units/parts, and/or modules within the wireless devices 100 and 200 may be entirely interconnected through a wired interface, or at least a portion may be wirelessly connected through the communication unit 110. For example, within the wireless devices 100 and 200, the control unit 120 and the communication unit 110 may be connected by wire, and the control unit 120 and the first unit (e.g., 130 and 140) may be connected through the communication unit 110. Additionally, each element, component, unit/part, and/or module within the wireless devices 100 and 200 may further include one or more elements. For example, the control unit 120 may be comprised of one or more processor sets. For example, the control unit 120 may be comprised of a communication control processor, an application processor, an electronic control unit (ECU), a graphics processing processor, and a memory control processor. As another example, the memory unit 130 includes random access memory (RAM), dynamic RAM (DRAM), read only memory (ROM), flash memory, volatile memory, and nonvolatile memory. volatile memory) and/or a combination thereof.

A hand-held device to which this specification applies is exemplified. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

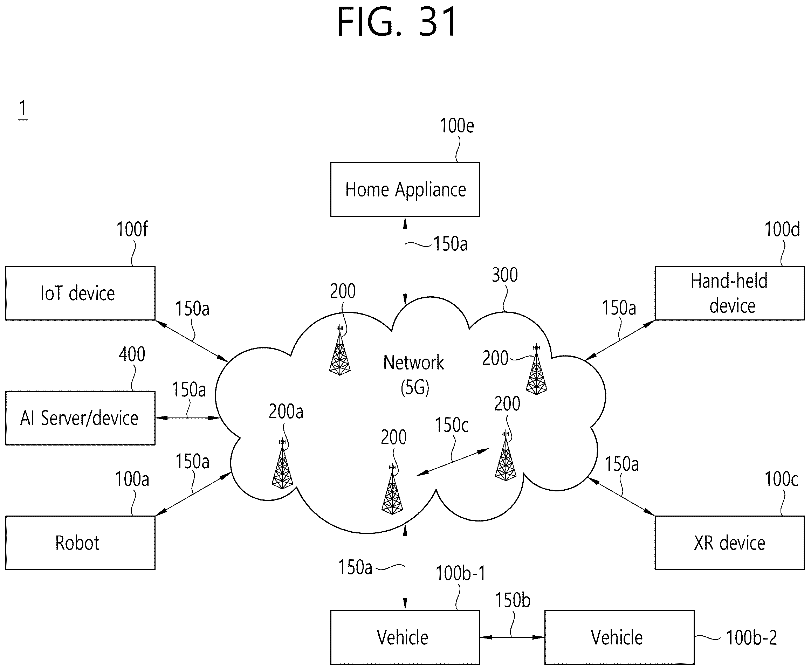

FIG. 31 illustrates a communication system 1 applied to the present specification.

Referring to FIG. 31, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 7. For convenience of explanation, among the frequency ranges that are used in an NR system, FR1 may mean a "sub 6GHz range", and FR2 may mean an "above 6GHz range" and may also be referred to as a millimeter wave (mmW).

[Table 7]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 8 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

[Table 8]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1.  A method of operating a user equipment (UE) in a wireless communication system, the method comprising:

    monitoring physical downlink control channel (PDCCH) candidates in a control resource set (CORESET) based on a search space; and
    receiving downlink control information (DCI) based on the monitoring,
    wherein the CORESET is determined as a first CORESET or a second CORESET based on whether a time resource configuring the search space is a half duplex (HD) symbol or a full duplex (FD) symbol.

2.  The method of claim 1, wherein, based on the time resource configuring the search space being the HD symbol, the UE monitors PDCCH candidates in the first CORESET, and based on the time resource configuring the search space being the FD symbol, the UE monitors PDCCH candidates in the second CORESET.

3.  The method of claim 1, wherein, based on the UE supporting an FD operation, the second CORESET different from the first CORESET is configured.

4.  The method of claim 1, wherein, based on the time resource configuring the search space being the FD symbol, among frequency resources configuring CORESET related with the search space, only resource element group (REG) resources within a downlink (DL) subband are used for configuring a control channel element (CCE) of the search space.

5.  The method of claim 4, wherein the CCE comprises six REGs, and one REG comprises one symbol in a time domain and twelve subcarriers in a frequency domain.

6. The method of claim 4, wherein among frequency resources configuring CORESET related with the search space, REG indexing is performed on remaining frequency resources obtained by excluding frequency resources other than frequency resources of the DL subband.

7. The method of claim 6, wherein the frequency resources other than the frequency resources of the DL subband are frequency resources overlapping an uplink (UL) subband or a guard subband.

8. The method of claim 1, wherein the HD symbol is a time resource capable of performing one of an UL operation or a DL operation, and the FD symbol is a time resource capable of simultaneously performing an UL operation and a DL operation by using different frequency bands.

9. The method of claim 1, further comprising:
receiving a higher layer information element that relates the search space with both an identity (ID) of the first CORESET and an ID of the second CORESET.

10. The method of claim 1, wherein the first CORESET and the second CORESET are different CORESETs.

11. A user equipment (UE), comprising:

at least one transceiver;
at least one memory; and
at least one processor operably coupled to the at least one memory and the at least one transceiver, wherein the at least one processor is adapted to:

monitor physical downlink control channel (PDCCH) candidates in a control resource set (CORESET) based on a search space; and
receive a downlink control information (DCI) based on the monitoring,
wherein, based on whether a time resource configuring the search space is a half-duplex (HD) symbol or a full-duplex (FD) symbol, the CORESET is determined as a first CORESET or a second CORESET.

12. An apparatus comprising:

at least one memory; and
at least one processor operably coupled to the at least one memory,
wherein the at least one processor is adapted to:

monitor physical downlink control channel (PDCCH) candidates in a control resource set (CORESET) based on a search space; and
receive downlink control information (DCI) based on the monitoring,
wherein the CORESET is determined as a first CORESET or a second CORESET based on whether a time resource configuring the search space is a half duplex (HD) symbol or a full duplex (FD) symbol.

13. At least one computer readable medium (CRM) having instructions to be executed by at least one processor to perform operations including:

monitoring physical downlink control channel (PDCCH) candidates in a control resource set (CORESET) based on a search space; and
receiving downlink control information (DCI) based on the monitoring,
wherein the CORESET is determined as a first CORESET or a second CORESET based on whether a time resource configuring the search space is a half duplex (HD) symbol or a full duplex (FD) symbol.

14. A method of operating a base station in a wireless communication system, the method comprising:

generating downlink control information (DCI); and
transmitting, to a user equipment (UE), the DCI on a physical downlink control channel (PDCCH) within a search space of a control resource set (CORESET),
wherein the CORESET is determined as a first CORESET or a second CORESET based on whether a time resource configuring the search space is a half duplex (HD) symbol or a full duplex (FD) symbol.

**15.** A base station (BS), comprising:

at least one transceiver;
at least one memory; and
at least one processor operably coupled to the at least one memory and the at least one transceiver, wherein the at least one processor is adapted to:

generate downlink control information (DCI); and
transmit, to a user equipment (UE), the DCI on a physical downlink control channel (PDCCH) within a search space of a control resource set (CORESET),
wherein the CORESET is determined as a first CORESET or a second CORESET based on whether a time resource configuring the search space is a half duplex (HD) symbol or a full duplex (FD) symbol.

# FIG. 1

MME/S-GW          MME/S-GW

— 30              — 30

S1   S1       S1   S1

20                      20

X2

eNB             eNB

X2        20        X2

E-UTRAN

eNB

— 10

# FIG. 2

# FIG. 3

# FIG. 4

# FIG. 5

gNB
- RRM between cells
- RB control
- Connection mobility control
- Wireless access control
- Measurement setting and provision
- Dynamic resource allocation (scheduler)

NG-RAN

AMF
- NAS security
- Idle state mobility processing

UPF
- Mobility anchoring
- PDU processing

5GC

SMF
- UE IP address allocation
- PDU session control

Internet

EP 4 712 631 A1

# FIG. 6

| ··· | One Frame (10ms) | ··· |

| ··· | Half-Frame (5ms) | Half-Frame (5ms) | ··· |

| ··· | Subframe 0 (1ms) | ··· | Subframe 4 (1ms) | Subframe 5 (1ms) | ··· | Subframe 9 (1ms) | ··· |

Subframe (1ms)

| 15KHz | Slot 0 (14symbols) |

1ms

| 30KHz | Slot 0 (14symbols) | Slot 1 |

500us

| 60KHz | Slot 0 (14symbols) | Slot 1 | Slot 2 | Slot 3 |

250us

| 120KHz | Slot 0 (14symbols) | Slot 1 | Slot 2 | Slot 3 | Slot 4 | Slot 5 | Slot 6 | Slot 7 |

125us

# FIG. 7

Resource grid

A carrier { A BWP { 1RB=12 subcarriers {

1 RE

1subcarrier

1 symbol

l=0 •••

k=0

EP 4 712 631 A1

# FIG. 8

CCE #2   CCE #n

$N^{CORESET}_{RB}$ resource blocks

CCE #1

1, 2 or 3 OFDM symbols

# FIG. 9

Downlink only, or Uplink only

Frequency

RB index

One TTI

DL Control channel

UL Control channel

EP 4 712 631 A1

# FIG. 10

DL only

UL only

UL control

Mixed UL-DL

DL control

Slot

⊠ : DL    ⧄ : UL

# FIG. 11

Initial cell search | system information reception | random access procedure | general DL/UL Tx/Rx

| P/S-SCH & [DLRS] & PBCH | PDCCH/ PDSCH (BCCH) | PRACH | PDCCH/ PDSCH | PUSCH | PDCCH/ PDSCH | PDCCH/ PDSCH | PUSCH/ PUCCH |

S11　　　　S12　　　S13　　　S14　　S15　　　S16　　　　S17　　S18

• DL/UL ACK/NACK
• UE CQI/PMI/Rank report using PUSCH and/or PUCCH

# FIG. 12

(a)

DL    UL

→ Frequency

Carrier #0
Subband-wise Full Duplex

(b)

DL        UL

→ Frequency

Carrier #0
Spectrum-Sharing Full Duplex

# FIG. 13

(a)

(b)

# FIG. 14

A: First time resource
B: Second time resource

(a)

(b)

# FIG. 15

A: First time resource
B: Second time resource

(a)

(b)

# FIG. 16

$N_{BWP}^{start}$

$RB_{RB\ group}^{start}$

RB group (6 RBs)

SBFD symbol

DL    G    UL    G    DL

DL subband      UL subband      DL subband

DL — Downlink resource      UL — Uplink resource      G — Guard resource

EP 4 712 631 A1

# FIG. 17

Monitoring PDCCH candidates in a CORESET
determined according to a search space,
wherein the CORESET is determined as either
a first CORESET or a second CORESET depending on
whether a time resource constituting the search
space is a half duplex (HD) symbol or
a full duplex (FD) symbol
— S171

Receiving downlink control
information (DCI) through the monitoring
— S172

# FIG. 18

```
┌──────────┐                                      ┌──────────┐
│    BS    │                                      │    UE    │
└────┬─────┘                                      └────┬─────┘
     │                                                 │
     │     Higher layer information element            │
     │     (e.g., an RRC IE called SearchSpace)        │
     │     which defines where and how to search       │
     │            for PDCCH candidates                 │
     │────────────────────────────────────────────────→ ⌐ S181
     │                                                 │
┌────┴───────────────────┐                            │
│     Generating DCI     ├─── S182                    │
└────┬───────────────────┘                            │
     │                                                 │
     │   Transmiting the DCI to the UE via a PDCCH     │
     │      in a search space within a CORESET         │
     │────────────────────────────────────────────────→ ⌐ S183
     │                                                 │
     │                       ┌─────────────────────────┴──────┐
     │                       │  Monitoring PDCCH candidates in either │── S184
     │                       │  the first CORESET or the second CORESET, │
     │                       │  depending on whether the time resource │
     │                       │    constituting the search space is │
     │                       │      a half duplex (HD) symbol or │
     │                       │      a full duplex (FD) symbol │
     │                       └─────────────────────────┬──────┘
     │                                                 │
```

# FIG. 19

$N_{BWP}^{start}$

$RB_{RB\ group}^{start}$

(RB group (6 RBs)

Non-SBFD symbol

Unused RB group

| DL | G | UL | G | DL |

SBFD symbol

|← DL subband 1 →|← UL subband →|← DL subband 2 →|

| DL | Downlink resource | UL | Uplink resource | G | Guard resource |

# FIG. 20

$N_{Subband}^{start}$

$RB_{RB\ group}^{start}$

Unused RB group    RB group (6 RBs)

| 0 | 1 | 1 | 0 | 0 | ✕✕✕✕✕✕ | 1 | 1 | 1 | 1 | 0 |

| DL | G | UL | G | DL |  SBFD symbol

DL subband 1        UL subband        DL subband 2

DL  Downlink resource    UL  Uplink resource    G  Guard resource

EP 4 712 631 A1

# FIG. 21

EP 4 712 631 A1

$N_{Subband}^{start}$

$RB_{RB\ group}^{start}$

$N_{Subband}^{start}$

$RB_{RB\ group}^{start}$

RB group (6 RBs)

| 1 | 1 | 1 | 0 | 0 |

| 1 | 1 | 1 | 0 | 0 |

| DL | G | UL | G | DL | SBFD symbol |

DL subband 1    UL subband    DL subband 2

DL — Downlink resource    UL — Uplink resource    G — Guard resource

# FIG. 22

RB resource for CORESET

symbol

RB

| 1 | 3 | 5 | 7 | 9 | 11 | | | 13 | 15 | 17 | 19 | 21 | 23 |
| 0 | 2 | 4 | 6 | 8 | 10 | | | 12 | 14 | 16 | 18 | 20 | 22 |

221

222

DL subband 1        UL subband        DL subband 2

# FIG. 23

# FIG. 24

# FIG. 25

codewords

layers

```
         401              402                  403               404            405              406
      ┌──────────┐    ┌──────────┐                          ┌──────────┐   ┌──────────┐   ┌──────────┐
  ───▶│ Scrambler│───▶│ Modulator│───▶                  ───▶│ Precoder │───▶│ Resource │──▶│  Signal  │──▶
      └──────────┘    └──────────┘     ┌──────────┐         │          │   │Block Mapper│  │Generator │
                                       │  Layer   │         │          │   └──────────┘   └──────────┘
                                       │  Mapper  │         │          │   ┌──────────┐   ┌──────────┐
  ───▶│ Scrambler│───▶│ Modulator│───▶ │          │───▶ ───▶│          │───▶│ Resource │──▶│  Signal  │──▶
      └──────────┘    └──────────┘     └──────────┘         └──────────┘   │Block Mapper│  │Generator │
         401              402                                              └──────────┘   └──────────┘
                                                                              405              406
```

# FIG. 26

# FIG. 27

Processor
(2000)

Control channel
transceiving unit
(2010)

Data channel
transceiving unit
(2020)

# FIG. 28

Processor
(3000)

Control information/
data generation module
(3010)

Transmission/
reception module
(3020)

# FIG. 29

# FIG. 30

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit, driving unit, computing unit)

EP 4 712 631 A1

# FIG. 31

## INTERNATIONAL SEARCH REPORT

| International application No. |
|---|
| **PCT/KR2024/006349** |

| | | |
|---|---|---|
| **A.** | **CLASSIFICATION OF SUBJECT MATTER** | |

**H04W 72/0453**(2023.01)i; **H04W 72/0457**(2023.01)i; **H04W 72/0446**(2023.01)i; **H04W 72/231**(2023.01)i; **H04L 5/00**(2006.01)i

According to International Patent Classification (IPC) or to both national classification and IPC

| | |
|---|---|
| **B.** | **FIELDS SEARCHED** |

Minimum documentation searched (classification system followed by classification symbols)

H04W 72/0453(2023.01); H04L 5/00(2006.01); H04L 5/14(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SBFD(sub band-wise full duplex), HD(half duplex), CORESET, search space, PDCCH, DCI

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | WO 2023-014178 A1 (LG ELECTRONICS INC.) 09 February 2023 (2023-02-09) See paragraphs [0087]-[0174]. | 1-3,8-15 |
| A | | 4-7 |
| Y | MEDIATEK INC. Discussion on subband non-overlapping full duplex for NR. R1-2302736, 3GPP TSG RAN WG1 Meeting #112bis-e, e-Meeting. 07 April 2023. See section 2.4.1. | 1-3,8-15 |
| A | HUAWEI et al. Discussion on potential enhancement on subband non-overlapping full duplex. R1-2302348, 3GPP TSG-RAN WG1 Meeting #112bis-e, e-Meeting. 07 April 2023. See section 2. | 1-15 |
| A | SONY. Considerations on Subband Full Duplex TDD operations. R1-2302845, 3GPP TSG RAN WG1 #112bis-e, e-Meeting. 07 April 2023. See section 2. | 1-15 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 August 2024** | **13 August 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/006349**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2023-0004256 A (ELECTRONICS AND TELECOMMUNICATIONS RESEARCH INSTITUTE) 06 January 2023 (2023-01-06) See paragraphs [0139]-[0150]; and figures 8-10. | 1-15 |

Form PCT/ISA/210 (second sheet) (July 2022)

**INTERNATIONAL SEARCH REPORT**
Information on patent family members

International application No.

**PCT/KR2024/006349**

| Patent document cited in search report | | | Publication date (day/month/year) | Patent family member(s) | | | Publication date (day/month/year) |
|---|---|---|---|---|---|---|---|
| WO | 2023-014178 | A1 | 09 February 2023 | CN | 117652120 | A | 05 March 2024 |
| | | | | EP | 4383633 | A1 | 12 June 2024 |
| KR | 10-2023-0004256 | A | 06 January 2023 | US | 2023-0007641 | A1 | 05 January 2023 |

Form PCT/ISA/210 (patent family annex) (July 2022)